(19) Europäisches Patentamt
European Patent Office
Office européen des brevets

(11) **EP 3 144 328 B1**

(12) **EUROPEAN PATENT SPECIFICATION**

(45) Date of publication and mention of the grant of the patent:
**06.03.2019 Bulletin 2019/10**

(51) Int Cl.:
*C08F 265/06* (2006.01)   *C08F 2/24* (2006.01)
*C08F 2/44* (2006.01)   *C08L 51/00* (2006.01)
*C09D 5/00* (2006.01)   *C08F 285/00* (2006.01)
*C08K 5/00* (2006.01)   *C08K 3/34* (2006.01)
*C08K 5/12* (2006.01)

(21) Application number: **15792172.7**

(22) Date of filing: **11.05.2015**

(86) International application number:
**PCT/JP2015/063491**

(87) International publication number:
**WO 2015/174372 (19.11.2015 Gazette 2015/46)**

(54) **ACRYLIC POLYMER, METHOD FOR PRODUCING SAME, AND PLASTISOL COMPOSITION INCLUDING SAID ACRYLIC POLYMER**

ACRYLPOLYMER, VERFAHREN ZUR HERSTELLUNG DAVON UND PLASTISOLZUSAMMENSETZUNG MIT BESAGTEM ACRYLPOLYMER

POLYMÈRE ACRYLIQUE, PROCÉDÉ POUR SA PRODUCTION ET COMPOSITION DE PLASTISOL COMPRENANT LEDIT POLYMÈRE ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2014 JP 2014098905**

(43) Date of publication of application:
**22.03.2017 Bulletin 2017/12**

(73) Proprietor: **Mitsubishi Chemical Corporation Tokyo 100-8251 (JP)**

(72) Inventors:
• **KONDO, Toru**
  **Otake-shi**
  **Hiroshima 739-0693 (JP)**
• **MIYAGAWA, Akiko**
  **Otake-shi**
  **Hiroshima 739-0693 (JP)**
• **KAYASHIMA, Megumi**
  **Toyohashi-shi**
  **Aichi 440-8601 (JP)**

(74) Representative: **TBK**
  **Bavariaring 4-6**
  **80336 München (DE)**

(56) References cited:
EP-A1- 2 116 573   WO-A1-2008/090906
JP-A- 2000 026 794   JP-A- 2005 263 846
JP-A- 2008 231 377   JP-A- 2009 163 026
JP-A- 2013 129 738   US-A- 5 474 783
US-A1- 2001 016 612   US-A1- 2004 086 569
US-A1- 2013 210 979

• FEDORS ROBERT F: "A METHOD FOR ESTIMATING BOTH THE SOLUBILITY PARAMETERS AND MOLAR VOLUMES OF LIQUIDS", POLYMER ENGINEERING AND SCIENCE, BROOKFIELD CENTER, US, vol. 14, no. 2, 1 February 1974 (1974-02-01), pages 147-154, XP008069569, ISSN: 0032-3888, DOI: 10.1002/PEN.760140211
• CHRISTIAN WOHLFARTH: "Solubility Parameters of Selected Polymers", CRC HANDBOOK OF CHEMISTRY AND PHYSICS, XX, XX, PAGE(S) 1 - 3 , 1 January 2010 (2010-01-01), XP002608010, Retrieved from the Internet: URL:http://www.hbcpnetbase.com/pdf/default .asp?id=13_09_90 [retrieved on 2010-11-03]

- **SIGMA ALDRICH: "Reference: polymer properties", INTERNET CITATION, 1 January 1999 (1999-01-01), pages 46-49, XP002608011, Retrieved from the Internet: URL:http://www.sigmaaldrich.com/etc/medial ib/docs/Aldrich/General_Information/polyme r_solutions.Par.0001.File.tmp/polymer_solu tions.pdf [retrieved on 2010-11-03]**

## Description

### TECHNICAL FIELD

The present invention relates to an acrylic polymer which can form a coating film with excellent vibration damping property and excellent chipping resistance and is suitable for a plastisol composition having excellent storage stability, a method for producing the acrylic polymer, and a plastisol composition including the acrylic polymer.

### BACKGROUND ART

A plastisol composition including a polymer and a plasticizer is applied to automobile underbody coating, automobile body sealer, wallpaper, carpet backing material, floor material, and toy, for example.

For an application like automobile underbody coating and automobile body sealer, a plastisol composition including vinyl chloride resin is conventionally used. However, there is a problem that, when used for such application, the plastisol composition including vinyl chloride resin generates hydrogen chloride or the like that can damage the facilities during a process for melting shredder dust at the time of recycling an automobile. Accordingly, to suppress the use amount of a vinyl chloride resin, determinations have been made on a plastisol composition which includes, for example, an acrylic polymer as a substituting material.

For example, as a plastisol composition in which an acrylic polymer is used, an acrylic resin for automobile undercoating with excellent chipping resistance and excellent storage stability and a plastisol composition using the acrylic resin are disclosed in Patent Literatures 1 to 3.

Meanwhile, to cope with the environmental problems in recent years, determinations are made to improve fuel efficiency based on automobile weight reduction. However, according to weight reduction, vibration like road noise may easily occur, thus a problem of having less silence inside an automobile is yielded. Thus, to improve the silence, a coating film formed of a plastisol composition is required to have a vibration damping property (i.e., property of suppressing vibration).

### CITATION LIST

### PATENT LITERATURE

Patent Literature 1: WO 2008/090906 A
Patent Literature 2: JP 2008-231377 A
Patent Literature 3: WO 2012/077293 A

### DISCLOSURE OF THE INVENTION

### PROBLEM TO BE SOLVED BY THE INVENTION

Although the plastisol composition including the acrylic polymer described in Patent Literatures 1 to 3 has good storage stability and the coating film obtained from the plastisol composition has good chipping resistance, the vibration damping property of a coating film is insufficient.

An object of the invention is to provide an acrylic polymer which can form a coating film with excellent vibration damping property and excellent chipping resistance and is suitable for a plastisol composition having excellent storage stability, a methode for producing the acrylic polymer, and a plastisol composition including the acrylic polymer.

### MEANS FOR SOLVING PROBLEM

The gist of the invention includes the following embodiments.

[1] A method for producing an acrylic polymer (P) including
a step (1) of obtaining a polymer (A) by polymerizing an acrylic monomer mixture (a), and
a step (2) of polymerizing an acrylic monomer mixture (b) in a dispersion liquid including the polymer (A) to form a polymer (B), and obtaining an acrylic polymer (P) including the polymer (A) and the polymer (B),
in which the content ratio of t-butyl methacrylate is 8 to 32% by mol within 100% by mol of the total of the monomers included in the acrylic monomer mixture (a),

the solubility parameter (SPA) of the polymer (A) is 19.90 $(J/cm^3)^{1/2}$ or more and the glass transition temperature of the polymer (A) is 90°C or higher, and
the relationship between the solubility parameter (SPB) of the polymer (B) and the solubility parameter (SPA) satisfies the following formula (1)

$$0.05 \leq (SPB) - (SPA) \leq 0.55 \cdots (1).$$

[2] The method for producing the acrylic polymer (P) described in [1], in which mass ratio between the acrylic monomer mixture (a) and the acrylic monomer mixture (b) is, when expressed in terms of [mass of the acrylic monomer mixture (a)]/[mass of the acrylic monomer mixture (b)], 98/2 to 65/35.

[3] The method for producing the acrylic polymer (P) described in [1], in which mass average molecular weight of the acrylic polymer (P) is 50,000 to 1,000,000.

[4] An acrylic polymer (P) obtained by the production method described in any one of [1] to [3].

[5] An acrylic polymer (P) described in [4] having at least one tanδ peak of 0.7 or more in a range of 30 to 105°C in a temperature-dependent chart of dynamic viscoelasticity, in which the dynamic viscoelasticity is measured by preparing a sheet-like test piece according to the following measurement method:

[Measurement method]

To 100 parts by mass of the acrylic polymer (P), 100 parts by mass of diisononyl phthalate and 2.5 parts by mass of calcium oxide are added, mixed and dispersed homogeneously, and after performing casting to thickness of 1 mm, a sheet-like test piece is prepared by heating at 130°C for 30 minutes, and dynamic viscoelasticity of the test piece is measured in a range of -50 to 150°C at frequency of 1 Hz.

[6] An acrylic polymer (P) described in [4] having a multilayer structure which includes a polymer (A) and a polymer (B) for coating the polymer (A), in which the acrylic polymer (P) includes, when the total of the monomer units constituting the polymer (A) is 100% by mol, 68 to 92% by mol of methyl methacrylate unit, 8 to 32% by mol of t-butyl methacrylate unit, and 30% by mol or less of other monomer units and, when the total of the monomer units constituting the polymer (B) is 100% by mol, 80% by mol or more of methyl methacrylate unit and 20% by mol or less of other monomer units, and mass ratio between the polymer (A) and the polymer (B) is, when expressed in terms of [mass of the polymer (A)]/[mass of the polymer (B)], 98/2 to 65/35.

[7] A plastisol composition including the acrylic polymer (P) described in any one of [4] to [6].

[8] A plastisol composition including the acrylic polymer (P) described in any one of [4] to [6] and a plasticizer.

[9] The plastisol composition described in [8], in which phthalic acid dialkyl ester is contained as the plasticizer.

[10] The plastisol composition described in [9], in which phthalic acid alkyl benzyl ester is further contained as the plasticizer.

[11] A plastisol composition including the acrylic polymer (P) described in any one of [4] to [6], a plasticizer, and a filler.

[12] The plastisol composition described in [11], in which at least one selected from gold mica, white mica, and wollastonite is contained as the filler.

[13] A plastisol composition including the acrylic polymer (P) described in any one of [4] to [6], a plasticizer, a filler, and an adhesive.

[14] A plastisol composition including the acrylic polymer (P) described in any one of [4] to [6], a plasticizer, a filler, an adhesive, and a foaming agent.

[15] The plastisol composition described in any one of [8] to [14], which is used for undercoating.

EFFECT OF THE INVENTION

The plastisol composition using the acrylic polymer (P) of the invention has excellent storage stability, and the coating film obtained from this plastisol composition has an effect of having excellent chipping resistance and an excellent vibration damping property.

MODE(S) FOR CARRYING OUT THE INVENTION

[Method for producing the acrylic polymer (P)]

The method for producing an acrylic polymer (P) according to the first embodiment of the invention includes a step (1) of obtaining a polymer (A) by polymerizing an acrylic monomer mixture (a), and a step (2) of polymerizing an acrylic monomer mixture (b) in a dispersion liquid including the polymer (A) to form a polymer (B), and obtaining an acrylic polymer (P) including the polymer (A) and the polymer (B), which is characterized in that the content ratio of t-butyl methacrylate is 8 to 32% by mol within 100% by mol of the total of the monomers included in the acrylic monomer mixture (a), the solubility parameter (SPA) of the polymer (A) is 19.90 $(J/cm^3)^{1/2}$ or more and the glass transition temperature of the polymer (A) is 90°C or higher, and the relationship between the solubility parameter (SPB) of the polymer (B) and the solubility parameter (SPA) satisfies the following formula (1)

$$0.05 \leq (SPB) - (SPA) \leq 0.55 \cdots (1).$$

Hereinbelow, the step (1) and the step (2) are explained in greater detail.

[Step (1)]

The step (1) of the production method of the invention is a step for obtaining a polymer (A) by polymerizing an acrylic monomer mixture (a).

According to the invention, the solubility parameter (SPA) of the polymer (A) which is obtained by polymerizing an acrylic monomer mixture (a) is 19.90 $(J/cm^3)^{1/2}$ or more. By using the polymer (A) with 19.90 $(J/cm^3)^{1/2}$ or more, a good vibration damping property can be exhibited without having excessive plasticization caused by a plasticizer contained in the plastisol composition. The SPA is preferably 19.90 to 20.50 $(J/cm^3)^{1/2}$ and more preferably 20.00 to 20.40 $(J/cm^3)^{1/2}$.

Herein, the solubility parameter is a value which is obtained by inserting a Sp value (Sp (ui)) of a monomer unit constituting the polymer to the following formula (2). Sp (ui) can be obtained by Fedors method that is described in Polymer Engineering and Science, Vol. 14, 147 (1974). In Table 1, Sp (Sp (ui)) values of representative monomer units are shown.

Abbreviations described in the table indicate the following monomer units.

- "MMA": methyl methacrylate unit
- "n-BMA": n-butyl methacrylate unit
- "i-BMA": i-butyl methacrylate unit
- "t-BMA": t-butyl methacrylate unit
- "2-HEMA": 2-hydroxyethyl methacrylate unit
- "NVImd": N-vinylimidazole unit
- "AAEM": 2-(acetoacetyloxy)ethyl methacrylate unit

[Table 1]

|  | Sp(ui) [$(J/cm^3)^{1/2}$] | Tg [°C] |
|---|---|---|
| MMA | 20.32 | 105 |
| n-BMA | 19.32 | 20 |
| i-BMA | 18.95 | 60 |
| t-BMA | 18.56 | 107 |
| 2-HEMA | 27.55 | 38 |
| NVImd | 25.16 | - |
| AAEM | 22.98 | - |

[Mathematical Formula 1]

$$SPA = \sum_{i=1}^{n} (Mi \times Sp(ui)) \cdots (2)$$

(in the formula (2), Mi represents molar fraction of a monomer unit i component, and $\sum Mi = 1$).

Furthermore, according to the first embodiment of the invention, the polymer (A) has glass transition temperature (hereinbelow, described as "Tg") of 90°C or higher. As the polymer (A) has glass transition temperature of 90°C or higher, the plastisol composition in which the acrylic polymer (P) including the polymer (A) is used can have good storage stability not only at room temperature but also at relatively high temperature like 40°C or higher. Specifically, the temperature is preferably 90 to 120°C, and more preferably 100 to 110°C.

Herein, the Tg of the polymer (A) is calculated from the FOX equation (the formula (3)) as mentioned below. Specifically, when the polymer is a polymer composed of a single kind of a monomer (i.e., homopolymer), standard analytical values shown in "Polymer Data Handbook" edited by the Society of Polymer Science, Japan can be adopted, and when the polymer is a copolymer polymerized from n kinds of monomers, the value calculated from a Tg of a homopolymer of each monomer can be used. The literature Tg values of representative homopolymers are shown in Table 1. In the table, "-" means that there is no literature value.

[Mathematical Formula 2]

$$\frac{1}{Tg + 273} = \sum_{i=1}^{n} \frac{Wi}{Tgi + 273} \quad \cdots \quad (3)$$

(in the formula (3), Tg represents a glass transition temperature, Tgi represents a glass transition temperature (°C) of a homopolymer of monomer unit i component, Wi represents a mass ratio of monomer unit i component ($\sum Wi = 1$), and n represents a natural number).

Acrylic monomer mixture (a)

Examples of the monomer included in the acrylic monomer mixture (a) include (meth)acrylate ester having a linear, branched, or cyclic alkyl group with 1 to 18 carbon atoms such as methyl (meth)acrylate, ethyl (meth)acrylate, n-butyl (meth)acrylate, s-butyl (meth)acrylate, i-butyl (meth)acrylate, t-butyl (meth)acrylate, cyclohexyl (meth)acrylate, 2-ethylhexyl (meth)acrylate, or stearyl (meth)acrylate; a monomer containing carboxy group such as (meth)acrylic acid, itaconic acid, crotonic acid, maleic acid, fumaric acid, 2-succinoyloxyethyl methacrylate, or 2-hexahydrophthaloyloxyethyl methacrylate; (meth)acrylic acid ester containing hydroxyl group such as 2-hydroxyethyl (meth)acrylate or 2-hydroxypropyl (meth)acrylate; (meth)acrylic acid ester containing carbonyl group such as 2-(acetoacetyloxy)ethyl (meth)acrylate; and (meth)acrylic acid ester containing amino group such as N-dimethylaminoethyl (meth)acrylate or N-diethylaminoethyl (meth)acrylate. Meanwhile, "methacrylic acid" is a general name of acrylic acid and methacrylic acid.

The acrylic monomer mixture (a) may also contain, if necessary, a monomer for forming crosslinking in the acrylic polymer (P). Specific examples thereof include a monomer like multi-functional (meth)acrylic acid ester such as (poly)ethylene glycol di(meth)acrylate, propylene glycol di(meth)acrylate, 1,6-hexanediol di(meth)acrylate, and trimethylolpropane tri(meth)acrylate.

Other than those described above, acrylamide and a derivative thereof such as acrylamide, diacetone acrylamide, N-methylol acrylamide, N-methoxymethyl acrylamide, N-ethoxymethyl acrylamide, or N-butoxymethyl acrylamide; or (meth)acrylonitrile may be also included.

Furthermore, a special monomer such as urethane modified acrylic acid ester, epoxy modified acrylic acid ester, or silicone modified acrylic acid ester may be also included.

Furthermore, vinyl compounds having a heterocyclic ring such as N-vinyl imidazole, 2-vinyl pyridine, 4-vinyl pyridine, N-vinyl carbazole, N-vinyl imidazoline, or N-vinyl pyrrolidone; aromatic vinyl compounds such as styrene, $\alpha$-methyl styrene, vinyl toluene, or divinyl benzene; or substituted ethylene compounds such as vinyl acetate, vinyl chloride or vinylidene chloride may be included.

To obtain the polymer (A) with Tg of 90°C or higher, the acrylic monomer mixture (a) contains t-butyl methacrylate. When the total of the monomers included in the acrylic monomer mixture (a) is 100% by mol, the acrylic monomer mixture (a) contains t-butyl methacrylate in a range of 8 to 32% by mol. By containing t-butyl methacrylate at 8% by mol or more, with regard to the finally-obtained plastisol composition including the acrylic polymer (P), the acrylic polymer (P) can have suitable compatibility with a plasticizer. By containing t-butyl methacrylate at 32% by mol or less, SPA of 19.90 $(J/cm^3)^{1/2}$ or more can be achieved and a coating film obtained from the plastisol composition is not excessively plasticized or excessively softened, and thus a good vibration damping property can be maintained. Content ratio of t-butyl methacrylate is preferably 10 to 30% by mol, and more preferably 15 to 25% by mol.

Furthermore, as for the monomer other than t-butyl methacrylate which is included in the acrylic monomer mixture (a), from the viewpoint of copolymerization property with t-butyl methacrylate and storage stability in a plasticizer of the acrylic polymer (P) to be obtained, methyl methacrylate is preferable.

When the total of the monomers included in the acrylic monomer mixture (a) is 100% by mol, it is preferable that the acrylic monomer mixture (a) contains methyl methacrylate in the range of 68 to 92% by mol. Content ratio of methyl methacrylate is preferably 70 to 90% by mol, and more preferably 70 to 80% by mol.

When the total of the monomers included in the acrylic monomer mixture (a) is 100% by mol, it is preferable that the acrylic monomer mixture (a) contains other monomers at 30% by mol or less. Content ratio of other monomers is preferably 0 to 10% by mol, and more preferably 0 to 5% by mol.

Preferred examples of other monomer include (meth)acrylic acid ester containing hydroxyl group. 2-Hydroxyethyl methacrylate is more preferable.

<Polymerization method>

The polymerization of the acrylic monomer mixture (a) in the step (1) may be carried out by a known polymerization method. In particular, from the viewpoint of the polymerization stability, emulsion polymerization is preferable. At the time of polymerization, an emulsifier, a initiator a chain transfer agent, or the like may be used depending on circumstances. Furthermore, the polymerization may be carried out in the presence of a polymer to be a seed particle. The polymer to be a seed particle may be produced by a known method like soap-free polymerization method and micro suspension polymerization method.

The emulsion polymerization may be carried out as a reaction with 1 step or a reaction with multi-steps.

Emulsifier

As an emulsifier, an anionic surface active agent or a nonionic surface active agent can be used. Examples of the anionic surface active agent include salts of alkylbenzene sulfonic acids, salts of alkylsulfonic acids, salts of alkylsulfuric acids, metal salts of fatty acids, salts of polyoxyalkyl ether sulfuric acids, salts of polyoxyethylene carboxylic acid sulfuric acids, salts of polyoxyethylene alkyl phenyl ether sulfuric acids and salts of dialkyl ester succinate sulfonic acids (sodium salt of dialkyl sulfosucciniate). These may be used either singly or two or more of them may be used in combination.

Example of the nonionic surface active agent include compounds having a polyoxyethylene chain in its molecule and having a surface active performance such as polyoxyethylene alkylphenyl ethers, polyoxyethylene alkyl ethers, polyoxyethylene fatty acid esters, polyoxyethylene sorbitan fatty acid esters, polyoxyethylene alkyl ether glycerin borates, polyoxyethylene alkyl ether phosphates and polyoxyethylene, compounds obtained by substituting a polyoxyethylene chain in these compounds by a copolymer of oxyethylene and oxypropylene; sorbitan fatty acid esters, fatty acid glycerin esters, glycerin fatty acid esters and pentaerythritol fatty acid esters. These may be used either singly or two or more of them may be used in combination.

The use amount of the emulsifier is preferably in the range of 0.1 to 5 parts by mass relative to 100 parts by mass of the acrylic monomer mixture (a).

Polymerization initiator

As for the polymerization initiator, hydrogen peroxide, inorganic peroxide, or a combination of a reducing agent and organic peroxide may be used.

Examples of the inorganic peroxide include potassium persulfate and ammonium persulfate. These may be used either singly or two or more of them may be used in combination.

The use amount of the inorganic peroxide is preferably in the range of 0.01 to 0.5 parts by mass relative to 100 parts by mass of the acrylic monomer mixture (a).

Examples of the reducing agent include ethylenediaminetetraacetic acid and sodium and potassium salts thereof, complex compounds of them with a metal such as iron, copper and chromium, sulfinic acid and sodium and potassium salts thereof, L-ascorbic acid and sodium, potassium and calcium salts thereof, ferrous pyrophosphate, ferrous sulfate, ammonium ferrous sulfate, sodium sulfite, acidic sodium sulfite, sodium formaldehyde sulfoxylate and reducing sugars. These may be used either singly or two or more of them may be used in combination.

Examples of the organic peroxide include hydroperoxides such as cumene hydroperoxide, p-cymene hydroperoxide, t-butyl isopropylbenzene hydroperoxide, diisopropylbenzene hydroperoxide, p-menthane hydroperoxide, decalin hydroperoxide, t-amyl hydroperoxide, t-butyl hydroperoxide and isopropyl hydroperoxide. These may be used either singly or two or more of them may be used in combination.

Chain transfer agent

For the polymerization of the acrylic monomer mixture (a) in the step (1), a chain transfer agent may be used for adjustment of the molecular weight of the polymer (A). Example of the chain transfer agent include n-octyl marcaptan n-dodecy marcaptan, t-dodecyl mercaptan, 2-ethylhexyl thioglycolic acid, octyl thioglycolic acid, methoxybutyl thioglycolic acid, and tridecyl mercaptopropionic acid. With regard to the amount of the chain transfer agent, it may be used at 0.01 part by mass or more relative to 100 parts by mass of the acrylic monomer mixture (a). Specifically, 0.01 to 1 part by mass is preferable.

Polymerization temperature

The polymerization temperature for the acrylic monomer mixture (a) may be determined depending on the type of a polymerization initiator or polymerization conditions. For example, when inorganic oxide such as potassium persulfate or ammonium persulfate is used singly as a polymerization initiator, the polymerization can be achieved when the temperature is the same or higher than the 10 hour half life temperature of a polymerization initiator. In particular, the temperature which is higher by 5 degrees or more than the 10 hour half life temperature of a polymerization initiator is preferable from the viewpoint of the stability of polymerization or reducing the time for polymerization.

Polymerization time

The polymerization time for the acrylic monomer mixture (a) may be set depending on the type or polymerization initiator or polymerization conditions. Although suitable polymerization time may vary depending on polymerization temperature, it is necessary that the polymerization is carried out within a time in which thermal degradation of polymerization initiator occurs to generate radicals.

[Step (2)]

The step (2) of the production method of the invention is a step for polymerizing an acrylic monomer mixture (b) in a dispersion liquid including the polymer (A) to form a polymer (B), and obtaining an acrylic polymer (P) including the polymer (A) and the polymer (B). According to the first embodiment of the invention, the solubility parameter (SPB) of the polymer (B), which is obtained by polymerizing the acrylic monomer mixture (b), and the solubility parameter (SPA) of the polymer (A) need to satisfy the following formula (1)

$$0.05 \leq (\text{SPB}) - (\text{SPA}) \leq 0.55 \cdots (1).$$

Like the SPA, the SPB can be also obtained by the following formula (4).
[Mathematical Formula 3]

$$\text{SPB} = \sum_{i=1}^{n} (Mi \times \text{Sp(ui)}) \cdots (4)$$

(in the formula (4), Mi represents molar fraction of a monomer unit i component, and $\sum$Mi = 1).
As the difference in solubility parameter between the polymer (A) and the polymer (B) (i.e., ((SPB) - (SPA))) is 0.05 or more, the polymer (B) can have a higher aggregation power than the polymer (A) and it is not excessively plasticized by a plasticizer. Accordingly, good storage stability is obtained. Incidentally, as the difference in solubility parameter between the polymer (A) and the polymer (B) is 0.55 or less, a difference in plasticization degree is small between each of them, and thus a vibration damping property can be obtained in a broad temperature range. Preferred difference in solubility parameter is 0.10 to 0.50.

Acrylic monomer mixture (b)

As for the acrylic monomer used in the acrylic monomer mixture (b), the same monomers as those illustrated to be included in the aforementioned acrylic monomer mixture (a) can be also used. However, it is preferable to select and use a monomer such that the polymer (B) obtained in the step (2) exhibits poor compatibility with a plasticizer to be used. That is because, when a plastisol composition is prepared by adding a plasticizer to the acrylic polymer (P), slow plasticization rate is obtained if the acrylic polymer (P) exhibits poor compatibility with a plasticizer, and thus the storage stability of the plastisol composition is enhanced.

For example, when diisononyl phthalate is used as a plasticizer, it is preferable to use methyl (meth)acrylate, ethyl (meth)acrylate, n-butyl (meth)acrylate, s-butyl (meth)acrylate, i-butyl (meth)acrylate, t-butyl (meth)acrylate, or 2-hydroxyethyl (meth)acrylate as the acrylic monomer used in the acrylic monomer mixture (b). It is also possible to use a monomer like N-vinylimidazole.

As the acrylic monomer used in the acrylic monomer mixture (b), it is preferable that methyl methacrylate is used at 80% by mol or more relative to 100% by mol of the total of the monomers contained in the acrylic monomer mixture (b).

By using methyl methacrylate at 80% by mol or more, the storage stability is enhanced more. Content ratio of the methyl methacrylate is preferably 80 to 100% by mol, and more preferably 90 to 98% by mol.

It is preferable that the acrylic monomer mixture (b) contains other monomers at 20% by mol or less relative to 100% by mol of the total of the monomers contained in the acrylic monomer mixture (b). Content ratio of other monomers is preferably 0 to 20% by mol, and more preferably 2 to 10% by mol. Preferred examples of other monomer include (meth)acrylic acid ester containing hydroxyl group similar to the monomer used in the acrylic monomer mixture (a). 2-Hydroxyethyl methacrylate is more preferable.

Mass ratio between the acrylic monomer mixture (a) and the acrylic monomer mixture (b) (hereinbelow, also described as "a/b") is, when expressed in terms of [mass of (a)]/[mass of (b)], preferably 98/2 to 65/35. When the ratio of the acrylic monomer mixture (b) is 2% by mass or more, it is believed that the polymer (B) can coat the polymer (A), and the storage stability of a plastisol composition to be obtained is further improved. As described herein, "coat" means that the polymer (B) is adhered on at least part of the surface of the polymer (A).

Furthermore, when the ratio of the acrylic monomer mixture (b) is 35% by mass or less, the vibration damping property of a coating film obtained from the plastisol composition is further enhanced. In addition, from the viewpoint of the vibration damping property of a molded article like coating film, the ratio of the acrylic monomer mixture (b) is more preferably 15% by mass or less (i.e., (a)/(b) is 98/2 to 85/15).

As for the combination of the acrylic monomer mixture (a) and the acrylic monomer mixture (b), it is preferable that the acrylic monomer mixture (a) contains t-butyl methacrylate, methyl methacrylate, the acrylic monomer mixture (b) contains methyl methacrylate, and (a) and/or (b) contains 2-hydroxyethyl methacrylate.

<Polymerization method>

The polymerization of the acrylic monomer mixture (b) in the step (2) may be carried out by a known polymerization method similar to the step (1). From the viewpoint of the polymerization stability, emulsion polymerization is preferable. At the time of polymerization, a polymerization inhibitor may be used, and an emulsifier, a polymerization initiator, a chain transfer agent, or the like that are the same as those exemplified in the step (1) described above may be also used depending on circumstances.

The acrylic monomer mixture (b) may be added all at once to a dispersion liquid including the polymer (A), or it may be added thereto in several divided portions. In that case, it is preferable that the dispersion liquid is added dropwise and mixed under stirring.

Dispersion liquid including the polymer (A)

The dispersion liquid including the polymer (A) is a reaction solution including the polymer (A) which is obtained after polymerizing the acrylic monomer mixture (a) in the step (1). The dispersion liquid may contain, other than the polymer (A), an emulsifier, a polymerization initiator, a chain transfer agent, or the like that are used at the time of polymerization.

Polymerization inhibitor

Adding and mixing of the acrylic monomer mixture (b) to the dispersion liquid including the polymer (A) is preferably carried out in the presence of a polymerization inhibitor for temporarily inhibiting the polymerization reaction of the acrylic monomer mixture (b). With regard to the method of using a polymerization inhibitor, there is a method in which, after the completion of the polymerization reaction of the acrylic monomer mixture (a) in the step (1) but before the addition of the acrylic monomer mixture (b) in the step (2), a polymerization inhibitor is added to the dispersion liquid including the polymer (A), or a method in which a polymerization inhibitor is blended in advance with the acrylic monomer mixture (b) and then added and mixed with the dispersion liquid including the polymer (A).

Examples of the polymerization inhibitor include p-methoxyphenol, p-t-butyl catechol, and diphenylamine.

Use amount of the polymerization inhibitor is 0.1 to 30 mol when the amount of the polymerization initiator used at the time of starting the polymerization is 1 mol.

More preferably, the polymerization inhibitor is added in an amount such that mol number (Q) of the polymerization inhibitor relative to the mol number (I) of the polymerization inhibitor present in the dispersion liquid including the polymer (A) satisfies the relationship of $0.1 \leq Q/I \leq 30$. The mol number of the polymerization inhibitor present in the dispersion liquid including the polymer (A) can be obtained by the method described in WO 2011/155566 A, for example.

Mass average molecular weight

In the step 1 and the step 2, the mass average molecular weight of the acrylic polymer (P), which is obtained by GPC (gel permeation chromatography) method (measured in terms of polystyrene standard) can be adjusted based on the addition amount of a polymerization initiator, the polymerization temperature, or the addition amount of a chain transfer agent. The mass average molecular weight of the acrylic polymer (P) is preferably 50,000 to 1,000,000, and more preferably 100,000 to 700,000. When the mass average molecular weight is the same or less than the upper limit of each range, plasticization is easily achieved by a plasticizer and a plastisol composition with excellent processability is obtained, and therefore desirable. Furthermore, when the mass average molecular weight is the same or more than the lower limit of each range, a decrease in the storage stability of the plastisol composition can be suppressed, and therefore desirable. Meanwhile, the mass average molecular weight can be adjusted by a general method like using a chain transfer agent or the like.

[Acrylic polymer (P)]

The acrylic polymer (P) of the second embodiment of the invention is a polymer which is obtained by the aforementioned [Method for producing the acrylic polymer (P)].
As the relationship between the solubility parameter (SPB) of the polymer (B) and the solubility parameter (SPA) satisfies the requirement of (SPB) - (SPA) $\leq 0.55$, the acrylic polymer (P) of the second embodiment of the invention can have good compatibility with a plasticizer, and as [mass of the acrylic monomer mixture (a)]/[mass of the acrylic monomer mixture (b)] is 98/2 to 65/35 and the mass of the acrylic monomer mixture (a) is large, the coating film formed of the plastisol composition including the acrylic polymer (P) can have excellent chipping resistance.
After the step (2), the obtained acrylic polymer (P) can be prepared in powder form by drying with spraying (i.e., spray drying) or drying after acid aggregation or base aggregation, for example. In particular, spray drying is preferable from the viewpoint that primary particles do not strongly bind to each other and they can be easily prepared as primary particles with weak shear force.
Volume average particle diameter of the acrylic polymer (P) obtained in powder form is preferably 5 to 200 $\mu$m. When the volume average particle diameter is 5 $\mu$m or more, handlability of the polymer is easy during the production of a plastisol composition. Furthermore, when the volume average particle diameter is 200 $\mu$m or less, the polymer in a plastisol composition can be homogenously dispersed, and as the coating film has less protrusions or the like that are generated by poor dispersion of the polymer, good outer appearance of a coating film is obtained.
In the present specification, the volume average particle diameter is a value which is measured by laser diffraction light scattering method.
The acrylic polymer (P) according to the third embodiment of the invention indicates a polymer which has at least one tan$\delta$ peak of 0.7 or more in a range of 30 to 105°C in a temperature-dependent chart of dynamic viscoelasticity, in which the dynamic viscoelasticity is measured by preparing a sheet-like test piece according to the following measurement method:

[Measurement method]

To 100 parts by mass of the acrylic polymer (P), 100 parts by mass of diisononyl phthalate and 2.5 parts by mass of calcium oxide are added, mixed and dispersed homogeneously, and after performing casting to thickness of 1 mm, a sheet-like test piece is prepared by heating at 130°C for 30 minutes, and after cutting a piece of 4 mm $\times$ 35 mm from the test piece, dynamic viscoelasticity is measured in a range of -50 to 150°C at frequency of 1 Hz.
According to the third embodiment of the invention, as the acrylic polymer (P) has at least one tan$\delta$ peak of 0.7 or more in a range of 30 to 105°C, the coating film formed of a plastisol composition including the acrylic polymer (P) can have an excellent vibration damping property.
It is preferable that, when the temperature (°C) is plotted against a horizontal axis and the tan$\delta$ is plotted against a vertical axis, the peak of loss tangent (tan$\delta$) as a ratio between tensile storage modulus (E') and tensile loss modulus (E"), i.e., E"/E', has a value that is as large as possible in a temperature range in which the coating film obtained from the plastisol composition is used, i.e., near room temperature. More preferably, the peak is present in the range of 30 to 105°C. Even more preferably, the peak is present in the range of 30 to 70°C.
Furthermore, a higher tan$\delta$ value can facilitate conversion of vibration to thermal energy, and thus a good vibration damping property can be shown. In the range of 30 to 70°C, tan$\delta$ peak is preferably 0.7 or more, and more preferably 0.8 or more.

It is also possible that the acrylic polymer (P) according to the third embodiment of the invention is a polymer which is obtained by the method for producing the acrylic polymer (P) which includes the step (1) of obtaining the polymer (A) by polymerizing the acrylic monomer mixture (a), and the step (2) of polymerizing the acrylic monomer mixture (b) in a dispersion liquid including the polymer (A) to form the polymer (B), and obtaining the acrylic polymer (P) including the polymer (A) and the polymer (B).

After the step (2), the obtained acrylic polymer (P) can be prepared in powder form by drying with spraying (i.e., spray drying) or drying after acid aggregation or base aggregation, for example. In particular, spray drying is preferable from the viewpoint that primary particles do not strongly bind to each other and they can be easily prepared as primary particles with weak shear force.

Volume average particle diameter of the acrylic polymer (P) obtained in powder form is preferably 5 to 200 $\mu$m. When the volume average particle diameter is 5 $\mu$m or more, handlability of the polymer is easy during the production of a plastisol composition. Furthermore, when the volume average particle diameter is 200 $\mu$m or less, the polymer in a plastisol composition can be homogenously dispersed, and as the coating film has less protrusions or the like that are generated by poor dispersion of the polymer, good outer appearance of a coating film is obtained.

As for the acrylic monomer mixture (a) and the acrylic monomer mixture (b), the same ones as those described in relation to the first embodiment of the invention above can be also used.

As for the method for polymerization of the acrylic monomer mixture (a) of the step (1), the same method as the one of the first embodiment of the invention above can be also used.

As for the method for polymerization of the acrylic monomer mixture (b) of the step (2), the same method as the one of the first embodiment of the invention above can be also used.

The acrylic polymer (P) according to the fourth embodiment of the invention is the acrylic polymer (P) having a multilayer structure which includes a polymer (A) and a polymer (B) for coating the polymer (A), in which the acrylic polymer (P) includes, when the total of the monomer units constituting the polymer (A) is 100% by mol, 68 to 92% by mol of methyl methacrylate unit, 8 to 32% by mol of t-butyl mathacrylate unit, and 30% by mnl or less of other monomer units and, when the total of the monomer units constituting the polymer (B) is 100% by mol, 80% by mol or more of methyl methacrylate unit and 20% by mol or less of other monomer units, and mass ratio between the polymer (A) and the polymer (B) is, when expressed in terms of [mass of the polymer (A)]/[mass of the polymer (B)], 98/2 to 65/35.

With regard to the acrylic polymer (P) according to the fourth embodiment of the invention, as the polymer (A) contains 68 to 92% by mol of methyl methacrylate unit and the polymer (B) contains 80% by mol or more of methyl methacrylate unit, the coating film formed of the plastisol composition which includes the acrylic polymer (P) can have an excellent vibration damping property and excellent storage stability. As the polymer (A) contains 8 to 32% by mol of t-butyl methacrylate unit, the plastisol composition which includes the acrylic polymer (P) can have an excellent chipping resistance.

It is also possible that the acrylic polymer (P) according to the fourth embodiment of the invention is a polymer which is obtained by the method for producing the acrylic polymer (P) which includes the step (1) of obtaining the polymer (A) by polymerizing the acrylic monomer mixture (a), and the step (2) of polymerizing the acrylic monomer mixture (b) in a dispersion liquid including the polymer (A) to form the polymer (B), and obtaining the acrylic polymer (P) including the polymer (A) and the polymer (B).

After the step (2), the obtained acrylic polymer (P) can be prepared in powder form by drying with spraying (i.e., spray drying) or drying after acid aggregation or base aggregation, for example. In particular, spray drying is preferable from the viewpoint that primary particles do not strongly bind to each other and they can be easily prepared as primary particles with weak shear force.

Volume average particle diameter of the acrylic polymer (P) obtained in powder form is preferably 5 to 200 $\mu$m. When the volume average particle diameter is 5 $\mu$m or more, handlability of the polymer is easy during the production of a plastisol composition. Furthermore, when the volume average particle diameter is 200 $\mu$m or less, the polymer in a plastisol composition can be homogenously dispersed, and as the coating film has less protrusions or the like that are generated by poor dispersion of the polymer, good outer appearance of a coating film is obtained.

As for the acrylic monomer mixture (a) and the acrylic monomer mixture (b), the same ones as those described in relation to the first embodiment of the invention above can be also used.

As for the method for polymerization of the acrylic monomer mixture (a) of the step (1), the same method as the one of the first embodiment of the invention above can be also used.

As for the method for polymerization of the acrylic monomer mixture (b) of the step (2), the same method as the one of the first embodiment of the invention above can be also used.

Furthermore, like the acrylic polymer (P) according to the fourth embodiment of the invention, the acrylic polymer (P) according to the second embodiment or the third embodiment of the invention may have a multilayer structure (i.e., core/shell structure) which includes the polymer (A) and the polymer (B) for coating the polymer (A). It is also possible that the acrylic polymer (P) of the invention is a polymer particle having bilayer structure in which the polymer (A) and the polymer (B) are formed in order as a core and an outermost layer (i.e., shell), respectively. Alternatively, it is also possible that the acrylic polymer (P) is a polymer particle having trilayer structure in which the polymer (S), which is obtained by polymerization of an acrylic monomer mixture (s), is present as a core and the polymer (A) and the polymer (B) are formed in order as a core and an outermost layer (i.e., shell), respectively. As for the acrylic monomer mixture (s), those exemplified for the monomer to be contained in the acrylic monomer mixture (a) can be also used. In particular, methyl methacrylate and n-butyl methacrylate are preferable.

When the total of the monomer units constituting the polymer (S) is 100% by mol, it is preferable to contain 20 to 85% by mol of methyl methacrylate monomer unit and 15 to 80% by mol of n-butyl methacrylate monomer unit.

When the total of the monomer units constituting the polymer (A) is 100% by mol, it is preferable to contain 68 to 92% by mol of methyl methacrylate monomer unit, 8 to 32% by mol of t-butyl methacrylate monomer unit, and 30% by mol or less of other monomer units.

When the total of the monomer units constituting the polymer (B) is 100% by mol, it is preferable to contain 80% by mol or more of methyl methacrylate monomer unit and 20% by mol or less of other monomer units.

Furthermore, mass ratio between the polymer (A) and the polymer (B) (hereinbelow, also referred to as "A/B") is, when expressed in terms of [mass of the polymer (A)]/[mass of the polymer (B)], preferably 98/2 to 65/35, and more preferably 98/2 to 85/15.

[Plastisol composition]

The plastisol composition according to the fifth embodiment of the invention includes the acrylic polymer (P) according to the above second embodiment, third embodiment, or fourth embodiment, a plasticizer, and a filler. If necessary, the plastisol composition may also contain a vinyl chloride resin, an adhesive, a foaming agent, a solvent, of the like. As the plastisol composition of the invention includes the acrylic polymer (P) of the invention, a coating film with excellent vibration damping property and excellent chipping resistance can be formed, and also excellent storage stability can be obtained.

Content ratio of the acrylic polymer (P) relative to mass of the plastisol composition is preferably 5 to 70% by mass.

Specific examples of the plasticizer include phthalate ester-type plasticizers like phthalic acid dialkyl ester such as dimethyl phthalate, diethyl phthalate, dibutyl phthalate, diheptyl phthalate, di-2-ethylhexyl phthalate, di-octyl phthalate, diisononyl phthalate, diisodecyl phthalate, and butyl benzyl phthalate, and phthalic acid alkyl benzyl ester such as texanol benzyl phthalate; adipate ester-type plasticizers such as dimethyl adipate, dibutyl adipate, diisobutyl adipate, dihexyl adipate, di-2-ethylhexyl adipate, diisononyl adipate, and dibutyl diglycol adipate; phosphate ester-type plasticizers such as trimethyl phosphate, triethyl phosphate, tributyl phosphate, tri-2-ethylhexyl phosphate, tributoxyethyl phosphate, triphenyl phosphate, tricresyl phosphate, trixylenyl phosphate, and cresylphenyl phosphate; trimellitate ester-type plasticizers such as tri-2-ethylhexyl trimellitate; sebacate ester-type plasticizers such as dimethyl sebacate, dibutyl sebacate, and di-2-ethyl hexyl sebacate; aliphatic polyester-type plasticizers such as poly-1,3-butanediol adipate; benzoic acid-type plasticizers such as diethylene glycol dibenzoate and dibutylene glycol dibenzoate; epoxidized ester-type plasticizers such as epoxidized soybean oil; alkyl sulfonic acid phenyl ester-type plasticizers such as alkyl sulfonic acid phenyl ester; alicyclic dibasic acid ester-type plasticizers; polyether-type plasticizers such as polypropylene glycol and polybutylene glycol; and citrate-type plasticizers such as acetyl tributyl citrate. These plasticizers may be used either singly or in a combination of two or more kinds thereof.

Among them, it is preferable to use phthalic acid dialkyl ester such as dioctyl phthalate, diisononyl phthalate, or diisodecyl phthalate from the viewpoint of cost and availability.

From the viewpoint of improving the vibration damping property, it is preferable to contain phthalic acid alkylbenzyl ester such as butyl benzyl phthalate or texanol benzyl phthalate.

Content of the plasticizer in plastisol composition is, relative to 100 parts by mass of the acrylic polymer (P), preferably 50 to 200 parts by mass, and more preferably 70 to 100 parts by mass.

When the total of the plasticizer is 100% by mass, it is preferable to contain phthalic acid dialkyl ester at 50% by mass or more. It is more preferable to contain phthalic acid alkylbenzyl ester at 0 to 40% by mass. It is even more preferable to contain phthalic acid alkylbenzyl ester at 10 to 30% by mass.

Examples of the filler include mica, wollastonite, calcium carbonate, aluminum hydroxide, colloidal silica, talc, glass powder, and aluminum oxide, and their content can be suitably selected depending on the object. From the viewpoint of improving the vibration damping property, it is preferable to contain at least one filler selected from gold mica, white mica, and wollastonite, and gold mica is more preferable.

As for the property of the filler, it is preferable to use a filler with high aspect ratio. The volume average particle diameter of the filler is more preferably 20 to 150 $\mu$m. The filler may be used either singly or in combination of two or more types thereof.

Content of the filler is, relative to 100 parts by mass of the acrylic polymer (P), preferably 5 to 400 parts by mass, and more preferably 50 to 300 parts by mass.

Examples of the vinyl chloride resin include a common vinyl chloride resin and a vinyl chloride · vinyl acetate copolymer for common paste.

Content of the vinyl chloride resin in the plastisol composition is, relative to 100 parts by mass of the acrylic polymer (P), preferably 0 to 100 parts by mass, and more preferably 5 to 50 parts by mass.

The adhesive may be suitably selected depending on the type of a substrate. For a case in which the substrate is an electroplated plate or a steel plate, it is possible to use an adhesive such as epoxy resin, block urethane resin, or polyamine resin. They may be used either singly or in combination of two or more types thereof. A curing agent for the adhesive can be also used. For example, for an adhesive of epoxy resin, a curing agent such as acid anhydride or an imidazole compound can be used. For an adhesive of block urethane resin, a curing agent such as dihydrazide compound can be used. Examples of the dihydrazide compound include adipic acid dihydrazide.

Content of the adhesive in the plastisol composition is, relative to 100 parts by mass of the acrylic polymer (P), preferably 5 to 50 parts by mass, and more preferably 10 to 40 parts by mass.

Content of the curing agent in the plastisol composition can be determined based on the number of groups of active hydrogens that are contained in the functional group of an adhesive and the curing agent. For example, when a block urethane resin is used as an adhesive, the ratio between the mol number of NCO groups contained in the block urethane resin and the mol number of active hydrogen groups contained in the curing agent is, when expressed in terms of [mol number of NCO groups]/[mole number of active hydrogen groups], preferably 0.5 to 2, and more preferably 0.7 to 1.5. Examples of the active hydrogen groups include a hydroxyl group, an amino group, a thiol group, and a carboxy group.

Foaming agent

According to blending of a foaming agent, thickness can be increased even with the same amount of coating and an improved vibration damping property can be obtained.

Examples of the foaming agent include a chemical foaming agent like azodicarbonamide, 4,4'-oxybis(benzenesulfonylhydrazide), N,N'-dinitrosopentamethylenetetramine, a composite foaming agent of azodicarbonamide and 4,4'-oxybis(benzenesulfonylhydrazide), or a composite foaming agent of N'-dinitrosopentamethylenetetramine and 4,4'-oxybis(benzenesulfonylhydrazide); and a physical foaming agent like heat-expandable micro balloon which includes hydrogen carbide and has a thermoplastic polymer shell of vinylidene chloride-acrylonitrile copolymer or acrylonitrile copolymer.

From the viewpoint of foaming magnitude, a composite foaming agent of azodicarbonamide and 4,4'-oxybis(benzenesulfonylhydrazide) is preferable as a chemical foaming agent. As a physical foaming agent, a micro balloon which has the maximum expansion temperature of 80 to 160°C is preferable.

As for the solvent, by using an aliphatic or an alicyclic hydrocarbon solvent, a plastisol composition with reduced burden on human body or environment can be obtained.

Examples of the aliphatic or alicyclic hydrocarbon solvent include an aliphatic hydrocarbon solvent such as n-hexane, 2-methylpentane, 3-methylpentane, 2,2-dimethylbutane, 2,3-dimethylbutane, n-heptane, n-octane, i-octane, n-decane, or n-dodecane; and an alicyclic hydrocarbon solvent such as cycloheane, methylcyclohexane, ethylcyclohexane, cycloheptane, or methylcycloheptane. Furthermore, a commercially available solvent can be also used, and examples thereof include "ISOPAR C", "ISOPAR E", "ISOPAR G", "ISOPAR H", "ISOPAR L", "ISOPAR M", "Exxsol DSP100/140", "Exxsol D30", "Exxsol D40", "Exxsol D80", "Exxsol D110", and "Exxsol D130" that are manufactured by Exxon Mobil Corporation; "SHELLSOL S", "SHELLSOL TG", "SHELLSOL TK", "SHELLSOL TM", "SHELLSOL D40", and "SHELLSOL D70" that are manufactured by Shell Chemicals Japan Ltd.; "IP SOLVENT 1016", "IP SOLVENT 1620", "IP SOLVENT 2028", "IP SOLVENT 2835", "IP CLEAN LX", and "IP CLEAN HX" that are manufactured by Idemitsu Kosan Co., Ltd.; "SWACLEAN 150" that is manufactured by Maruzen Petrochemical CO., LTD. They may be used either singly or in combination of two or more types thereof.

Additionally, the plastisol composition may contain pigments such as titanium oxide and carbon black, diluents such as mineral turpene and mineral spirit, a hygroscopic agent such as calcium oxide, and also a defoaming agent, fungicides and a leveling agent, in a range not disturbing the above-described components.

Plastisol for undercoating

Because the plastisol of the invention has chipping resistance strength, a plastisol composition which is favorable for coating application, in particular, automobile undercoating application, can be provided.

The method for using the plastisol of the invention as an undercoating includes a step of performing coating on a required area to have any thickness and any coating form by using a known coating means like brush coating, roller coating, air spray coating, electrostatic coating, and airless spray coating, and a step of forming a coating film based on heating by using a hot air circulation dryer furnace or the like.

The plastisol composition can be produced by dispersing the acrylic polymer (P) with a plasticizer, for example. For the dispersion, a known mixing device can be used. Specific examples thereof include a pony mixer, a change-can mixer, a Hobert mixer, a planetary mixer, a butterfly mixer, a grinding machine and a kneader.

The plastisol composition may be used as a coating material or a molding material, and is particularly useful as a coating material. As for the method for forming a coating film, there can be a method of forming a coating film by a coating method like dip coating method, a spray coating method or the like followed by baking.

The temperature for the baking is preferably 80 to 220°C. The time for the baking is preferably 5 to 60 minutes.

The film thickness of the coating film to be obtained is preferably 0.3 to 5 mm.

[Vibration damping property of coating film obtained from plastisol composition]

The coating film obtained from the plastisol composition of the invention has a favorable vibration damping property. The vibration damping property is exhibited by converting vibration energy like road noise, which is applied from the outside to an automobile, to heat energy in the coating film when the composition is used for automobile undercoating. As an exemplary method for measuring the vibration damping property, there is a method of measuring dynamic viscoelasticity of a coating film according to a change in temperature. The dynamic viscoelasticity can be expressed with tensile storage modulus (E') and tensile loss modulus (E"). Those values can be obtained by adding, to 100 parts by mass of the acrylic polymer (P), 100 parts by mass of diisononyl phthalate and 2.5 parts by mass of calcium oxide followed by homogeneous mixing and dispersing, and after performing casting to thickness of 1 mm, a coating film is produced by heating at 130°C for 30 minutes, and after cutting a test piece of 4 mm × 35 mm, dynamic viscoelasticity of the test piece is measured in a range of -50 to 150°C at frequency of 1 Hz.

When the temperature (°C) is plotted against a horizontal axis and the $\tan\delta$ is plotted against a vertical axis, the peak of loss tangent ($\tan\delta$) as a ratio between tensile storage modulus (E') and tansile loss modulus (E"), i.e., E"/E', has a value that is as large as possible in a temperature range in which the coating film obtained from the plastisol composition is used, i.e., near room temperature. More preferably, the peak is present in the range of 30 to 105°C. Even more preferably, the peak is present in the range of 30 to 70°C.

Furthermore, a higher $\tan\delta$ value can facilitate conversion of vibration to thermal energy, and thus a good vibration damping property can be shown. In the range of 30 to 70°C, $\tan\delta$ peak is preferably 0.7 or more, and more preferably 0.8 or more.

Meanwhile, as the difference in solubility parameter between the polymer (A) and the polymer (B) increases, the loss tangent ($\tan\delta$) peak has a lower value in general. On the other hand, when the difference in solubility parameter between the polymer (A) and the polymer (B) decreases, the loss tangent ($\tan\delta$) peak has a higher value.

Thus, to obtain even higher vibration damping property in a broad temperature range, it is preferable to have the acrylic polymer (P) in which the difference in solubility parameter between the polymer (A) and the polymer (B), i.e., (SPB) - (SPA), satisfies the relationship of $0.05 \leq$ (SPB) - (SPA) $\leq 0.55$, and also the acrylic polymer (P) has at least one $\tan\delta$ peak of 0.7 or more in a range of 30 to 105°C.

It is also possible to evaluate the vibration damping property by measuring the loss coefficient $\eta$.

The loss coefficient $\eta$ and $\tan\delta$ have a relationship represented by Oberst's double beam theoretical formula of the following formula (5), as it is described in H. Oberst; "U'ber die Dampfung der Biegeschwingungen dunner Blesche durch festhafitende Belage," ACUSTICA, 2, 181-194, 1952.

[Mathematical Formula 4]

$$\text{loss coefficient } \eta \doteqdot e \times n^2 \times \tan\delta \cdots (5)$$

(in the formula (5), e indicates a value represented by (Young's modulus of vibration damping material)/(Young's modulus of substrate), n is a value represented by (Thickness of vibration damping material)/(Thickness of substrate), and $\tan\delta$ indicates loss tangent of vibration damping material).

In the formula, the vibration damping material means a coating film which is obtained from the plastisol composition of the invention. The substrate indicates a substrate on which the plastisol composition is coated, and in an automobile line, for example, it indicates a steel plate with coating obtained by electroplating. Young's modulus of a substrate can be obtained based on a slope of a stress-deformation curve which expresses a relationship between deformation caused by general elongation, compression, or the like and stress, or based on a calculation formula with which Young's modulus is obtained according to measurement using a device for measuring a vibration damping property. Young's modulus of a vibration damping material can be obtained based on an equation that is specified by the loss coefficient of a composite of a base and a vibration damping material that is obtained by a device for measuring a vibration damping property, and Young's modulus. For example, by measuring the loss coefficient $\eta$ at various temperature conditions, a temperature range in which the highest vibration damping property is exhibited can be obtained. Also for the present case, it is preferable to have a value that is as large as possible in a temperature range to be used, i.e., near room temperature. When the temperature (°C) is plotted against a horizontal axis and the loss coefficient $\eta$ is plotted against a vertical axis, it is preferable to have a peak in the range of 0 to 40°C. It is more preferable to have a peak in the range of 0 to 30°C. In the range of 0 to 40°C, peak of the loss coefficient $\eta$ is preferably 0.08 or more, and more preferably 0.10 or more.

EXAMPLES

Hereinbelow, the invention will be described in detail by examples. Evaluation methods and evaluation criteria in Examples are as described below. In the following descriptions, "parts" means "parts by mass".

<Example 1>

[Step (1)]

A 2 liter four-necked flask equipped with a thermometer, a nitrogen gas introduction tube, a stirrer, a dropping funnel and a cooling tube was charged with 544 g of ion exchange water, and flushed with nitrogen gas for 30 minutes to substitute the oxygen dissolved in ion exchange water. After termination of the nitrogen gas flush, the mixture was heated up to 80°C while stirring at 200 rpm.
When the inner temperature reached 80°C, the acrylic monomer (s) consisting of 26.1 g of methyl methacrylate and 19.9 g of n-butyl methacrylate was added at once.
Subsequently, 0.40 g of potassium persulfate as a polymerization initiator and 16 g of ion exchange water were added for polymerization. After 45 minutes, 0.32 g of sodium dialkyl sulfosuccinate (trade name: PELEX OT-P, manufactured by Kao Corporation) and 16.0 g of ion exchange water were added. Further after 15 minutes, the acrylic monomer mixture (a) consisting of 440.6 g (72.8% by mol) of methyl methacrylate, 208.4 g (24.3% by mol) of t-butyl methacrylate, 22.9 g (2.9% by mol) of 2-hydroxyethyl methacrylate, 0.72 g of sodium dialkyl sulfosuccinate (trade name: PELEX OT-P, manufactured by Kao Corporation) as the acrylic acid monomer mixture (a) and 207.2 g of ion exchange water were added dropwise thereto over 4 hours and 30 minutes to complete the polymerization, obtaining a dispersion including the polymer (A).

[Step (2)]

Next, after keeping the dispersion including the polymer (A) obtained in the step (1) at 80°C for 60 minutes, 24 mg of p-methoxyphenol as a polymerization inhibitor and 4 g of ion exchange water were added thereto. Five minutes after the introduction of the polymerization inhibitor, the acrylic monomer mixture (b) consisting of 77.0 g (97.1% by mol) of methyl methacrylate and 3.0 g (2.9% by mol) of 2-hydroxyethyl methacrylate as the acrylic monomer mixture (b), 0.8 g of sodium dialkyl sulfosuccinate (trade name: PELEX OT-P, manufactured by Kao Corporation) and 28 g of ion exchange water was added dropwise thereto over 30 minutes.
Stirring at 80°C was continued for 2 hours and 30 minutes to obtain a dispersion of the polymer (P-1) including the polymer (A) and the polymer (B). The polymerization was carried out under an environment of nitrogen gas flush at a rate of 25 ml per minute. The resultant dispersion of the acrylic polymer (P-1) was spray-dried under conditions of inlet temperature/outlet temperature = 150/65°C and a disk revolution number of 20,000 rpm using a spray drier L-8 type (manufactured by OHKAWARAKAKOHKI Co., Ltd.) to obtain the acrylic polymer (P-1).

[Mass average molecular weight]

The obtained acrylic polymer (P-1) was measured by GPC (gel permeation chromatography) method and the value measured in terms of polystyrene standard at the following conditions was used as mass average molecular weight of a polymer.

- Apparatus: manufactured by TOSOH CORPORATION, high performance GPC apparatus HLC-8120
- Column: manufactured by TOSOH CORPORATION, 4 columns of TSKgel SuperHM-H are connected in series
- Oven temperature: 40°C
- Eluent: tetrahydrofuran
- Sample concentration: 0.3% by mass
- Flow rate: 0.6 mL/minute

- Injection amount: 20 μL
- Detector: RI (scanning diffractometer)

[Storage stability]

100 Parts of the acrylic polymer (P-1), and as a plasticizer, 100 parts of diisononyl phthalate (manufactured by J-PLUS Co., Ltd.) were mixed under atmospheric pressure (0.1 MPa) for 5 seconds in a vacuum mixer.

Further, the pressure was reduced to 2.7 kPa and the mixture was mixed for 115 seconds, to obtain a plastisol composition for storage stability evaluation. The resultant plastisol composition was kept for 2 hours in a constant-temperature incubator of 25°C, then, the viscosity ($\alpha$) (unit: Pa·s) after 1 minute was measured using a BH type viscometer (manufactured by Tokyo Keiki Inc.) No. 7 rotor at a revolution number of 20 rpm.

The plastisol composition after the measurement was stored under an atmosphere of 40°C, and the viscosity ($\beta$) was measured after 10 days by the same method as for the initial viscosity. Furthermore, the viscosity increase rate (%) was calculated from the formula of viscosity increase rate (%) = $[(\beta-\alpha)/\alpha] \times 100$.

[Measurement of viscoelasticity of coating film]

100 Parts of the acrylic polymer (P-1), 100 parts of diisononyl phthalate (manufactured by J-PLUS Co., Ltd.) as a plasticizer, and 2.5 parts of calcium hydroxide were mixed under atmospheric pressure (0.1 MPa) for 5 seconds in a vacuum mixer.

Further, the pressure was reduced to 2.7 kPa and the mixture was mixed for 115 seconds to obtain a plastisol composition for viscoelasticity evaluation. The plastisol composition was coated to have a thickness of about 1 mm on a Teflon (registered trademark)-coated iron plate (thickness of about 2 mm), and heated in a gear oven of 130°C for 30 minutes to obtain a sheet-like molded article.

The obtained sheet-like molded article was cut to a rectangle of 4 mm × 35 mm (width × length). By using a device for measuring viscoelasticity (RheogelE-4000 manufactured by UBM), the dynamic viscoelasticity was measured in a range of -50 to 150°C at frequency of 1 Hz (temperature increase rate: 4°C/minute). From the obtained temperature-dependent dynamic viscoelasticity chart, at least one tanδ peak was observed, and the highest tanδ peak temperature and peak value were read.

[Preparation of plastisol composition]

200 Parts of calcium carbonate (trade name: Whiton P-70, manufactured by SHIRAISHI CALCIUM KAISHA, LTD.) as a filler, 80 parts of diisononyl phthalate (manufactured by J-PLUS Co., Ltd.) and 20 parts of Santicizer 278 (trade name, manufactured by Ferro Japan, phthalic acid texanol benzyl) as a plasticizer, 20 parts of a block urethane resin (trade name: ADEKA resin QR-9401, manufactured by ADEKA CORPORATION) as an adhesive, 1.68 parts of adipic acid dihydrazide (trade name: Adipic Dihydrazide, manufactured by Otsuka Chemical Co., Ltd.) as a curing agent, 20 parts of ISOPAR H (trade name, manufactured by Exxon Mobil) as a solvent, and 3 parts of calcium oxide as a hygroscopic agent were mixed under atmospheric pressure (0.1 MPa) for 10 seconds by a vacuum mixer ARV-200 (trade name, manufactured by THINKY Corporation). Then, the pressure was reduced to 2.7 kPa, and the mixture was mixed for 170 seconds to obtain a kneaded product composed of calcium carbonate and plasticizer. Subsequently, 100 parts of the polymer (P-1) was added thereto and mixed under atmospheric pressure (0.1 MPa) for 10 seconds by a vacuum mixer, then, the pressure was reduced to 2.7 kPa and the mixture was mixed for 110 seconds to obtain a plastisol composition. The resultant plastisol composition was evaluated for chipping resistance strength and vibration damping property, and the evaluations results are shown in Table 2.

[Chipping resistance strength]

The obtained plastisol composition was coasted on a cation electro-plated plate (manufactured by Miki Coating) of 150 mm × 70 mm × 0.8 mm, and heated at 130°C for 30 minutes, to form a coating film having a thickness of 1 mm. Cuts of 2 mm (longitudinal) × 4 mm (lateral) were made to prepare a test piece which was then placed at an angle of 60° from the horizontal direction. A test of allowing 3 kg of a brass nut (M4 size) to collide the test piece from a height of 2 m through a vinyl chloride pipe having a diameter of 20 mm was repeated, and the total mass of the nut dropped until breakage of the test piece to expose the base material was measured.

[Evaluation of vibration damping property]

The obtained plastisol composition was coated on the range of 200 mm × 15 mm of a SPCC steel plate of 250

mm $\times$ 15 mm $\times$ 0.8 mm (manufactured by PALTEK Corporation) so as to have surface density of 4 kg/m$^2$. By heating for 30 minutes at 130°C, a test piece was obtained. With regard to the vibration damping property of the test piece, the loss coefficient of the secondary resonant peak was obtained by a cantilevering method which uses a device for measuring vibration damping property (manufactured by Ono Sokki Co., Ltd.). The measurement temperature was set from -10°C to 60°C. After setting at each temperature, the temperature was maintained for 1 hour at the measurement temperature, and then the measurement was initiated.

<Examples 2 to 11>

The acrylic polymer (P-2) to (P-11) were produced in the same manner as Example 1 except that the acrylic monomer mixture (a) and the acrylic monomer mixture (b) are changed to those shown in Tables 2 and 3 and a chain transfer agent is added as shown in Tables 2 and 3. Measurement of mass average molecular weight, storage stability, and viscoelasticity of a coating film was carried out in the same manner as Example 1. The plastisol composition was prepared in the same manner as Example 1, and then evaluations were also made for chipping resistance strength and vibration damping property in the same manner as Example 1. The results are shown in Tables 2 and 3. Meanwhile, for Examples 10 and 11, the polymerization was carried out without using any polymerization inhibitor.

<Comparative Examples 1 and 2>

The acrylic polymers (P-12) to (P-13) were produced in the same manner as Example 1 except that the acrylic monomer mixture (a) and the acrylic monomer mixture (b) are changed to those shown in Tables 3. Measurement of mass average molecular weight, storage stability, and viscoelasticity of a coating film was carried out in the same manner as Example 1. The plastisol composition was prepared in the same manner as Example 1, and then evaluations were also made for chipping resistance strength and vibration damping property in the same manner as Example 1. The results are shown in Table 3. Meanwhile, for Comparative Examples 1 and 2, the polymerization was carried out without using any polymerization inhibitor.

<Comparative Example 3>

A 2 liter four-necked flask equipped with a thermometer, a nitrogen gas introduction tube, a stirrer, a dropping funnel and a cooling tube was charged with 544 g of pure water and sufficiently flushed with nitrogen gas for 30 minutes to substitute the oxygen dissolved in pure water. After termination of the nitrogen gas flush, the mixture was heated up to 80°C while stirring at 200 rpm. When the inner temperature reached 80°C, a monomer mixture of 26.1 g of methyl methacrylate and 19.9 g of n-butyl methacrylate, 0.4 g of potassium persulfate as a polymerization initiator and 16 g of ion exchange water was added followed by polymerization for 1 hour. Subsequently, a monomer mixture containing 276 g of methyl methacrylate and 260 g of t-butyl methacrylate as the acrylic monomer mixture (a), 5.6 g of sodium dialkylsulfosuccinate (trade name: PELEX OT-P, manufactured by Kao Corporation) as an anionic surface active agent, and 268 g of pure water was added. Then, the mixture was maintained for 1 hour after heat generation caused by polymerization is not observed, and a monomer mixture containing 80 g of methyl methacrylate as the acrylic monomer mixture (b), 0.8 g of sodium dialkylsulfosuccinate (trade name: PELEX OT-P, manufactured by Kao Corporation) as an anionic surface active agent, and 40 g of pure water was added. Then, the mixture was maintained for 1 hour after heat generation caused by polymerization is not observed, and a monomer mixture containing 13.5 g of methyl methacrylate, 8.4 g of i-butyl methacrylate, and 1.8 g of N-vinyl imidazole as the acrylic monomer mixture (b), 0.24 g of sodium dialkylsulfosuccinate (trade name: PELEX OT-P, manufactured by Kao Corporation) as an anionic surface active agent, and 12 g of pure water was added. After that, by stirring continuously for 1 hour at 80°C, a polymer dispersion was obtained. The obtained polymer mixture was subjected to spray drying like Example 1 to obtain the acrylic polymer (P-14). Measurement of mass average molecular weight, storage stability, and viscoelasticity of a coating film was carried out in the same manner as Example 1. The plastisol composition was prepared in the same manner as Example 1, and then evaluations were also made for chipping resistance strength and vibration damping property in the same manner as Example 1. The results are shown in Table 4.

<Comparative Example 4>

A 2 liter four-necked flask equipped with a thermometer, a nitrogen gas introduction tube, a stirrer, a dropping funnel and a cooling tube was charged with 544 g of pure water and sufficiently flushed with nitrogen gas for 30 minutes to substitute the oxygen dissolved in pure water. After termination of the nitrogen gas flush, the mixture was heated up to 80°C while stirring at 200 rpm. When the inner temperature reached 80°C, a monomer mixture of 26.1 g of methyl methacrylate and 19.9 g of n-butyl methacrylate, 0.4 g of potassium persulfate as a polymerization initiator and 16 g of ion exchange water was added followed by polymerization for 1 hour. Subsequently, a monomer mixture containing 485.5 g of methyl methacrylate and 50.5 g of t-butyl methacrylate as the acrylic monomer mixture (a), 5.6 g of sodium dialkylsulfosuccinate (trade name: PELEX OT-P, manufactured by Kao Corporation) as an anionic surface active agent, and 268 g of pure water was added. Then, the mixture was maintained for 1 hour after heat generation caused by polymerization is not observed, and a monomer mixture containing 108.1 g of methyl methacrylate and 51.9 g of i-butyl methacrylate as the acrylic monomer mixture (a), 1.6 g of sodium dialkylsulfosuccinate (trade name: PELEX OT-P, manufactured by Kao Corporation) as an anionic surface active agent, and 80 g of pure water was added. Then, the mixture was maintained for 1 hour after heat generation caused by polymerization is not observed, and a monomer mixture containing 80 g of methyl methacrylate as the acrylic monomer mixture (b), 0.8 g of sodium dialkylsulfosuccinate (trade name: PELEX OT-P, manufactured by Kao Corporation) as an anionic surface active agent, and 40 g of pure water was added. Furthermore, the mixture was maintained for 1 hour after heat generation caused by polymerization is not observed, and a monomer mixture containing 13.5 g of methyl methacrylate, 8.4 g of i-butyl methacrylate, and 1.8 g of N-vinyl imidazole, 0.24 g of sodium dialkylsulfosuccinate (trade name: PELEX OT-P, manufactured by Kao Corporation) as an anionic surface active agent, and 12 g of pure water was added. After that, by stirring continuously for 1 hour at 80°C, a polymer dispersion was obtained. The obtained polymer mixture was subjected to spray drying like Example 1 to obtain the acrylic polymer (P-15). Measurement of mass average molecular weight, storage stability, and viscoelasticity of a coating film was carried out in the same manner as Example 1. The plastisol composition was prepared in the same manner as Example 1, and then evaluations were also made for chipping resistance strength and vibration damping property in the same manner as Example 1. The results are shown in Table 4.

<Comparative Example 5>

A 2 liter four-necked flask equipped with a thermometer, a nitrogen gas introduction tube, a stirrer, a dropping funnel and a cooling tube was charged with 544 g of pure water and sufficiently flushed with nitrogen gas for 30 minutes to substitute the oxygen dissolved in pure water. After termination of the nitrogen gas flush, the mixture was heated up to 80°C while stirring at 200 rpm. When the inner temperature reached 80°C, a monomer mixture of 26.1 g of methyl methacrylate and 19.9 g of n-butyl methacrylate, 0.4 g of potassium persulfate as a polymerization initiator and 16 g of ion exchange water was added followed by polymerization for 1 hour. Subsequently, a monomer mixture containing 272 g of methyl methacrylate and 257.6 g of t-butyl methacrylate as the acrylic monomer mixture (a), 4.8 g of sodium dialkylsulfosuccinate (trade name: PELEX OT-P, manufactured by Kao Corporation) as an anionic surface active agent, and 280 g of pure water was added dropwise thereto. Then, the mixture was maintained for 1 hour after heat generation caused by polymerization is not observed, and a monomer mixture containing 102.4 g of methyl methacrylate and 48.8 g of i-butyl methacrylate as the acrylic monomer mixture (b), 1.4 g of sodium dialkylsulfosuccinate (trade name: PELEX OT-P, manufactured by Kao Corporation) as an anionic surface active agent, and 80 g of pure water was added. Then, the mixture was maintained for 1 hour after heat generation caused by polymerization is not observed, and a monomer mixture containing 76 g of methyl methacrylate as the acrylic monomer mixture (b), 0.7 g of sodium dialkylsulfosuccinate (trade name: PELEX OT-P, manufactured by Kao Corporation) as an anionic surface active agent, and 40 g of pure water was added. After that, by stirring continuously for 1 hour at 80°C, a polymer dispersion was obtained. The obtained polymer mixture was subjected to spray drying like Example 1 to obtain the acrylic polymer (P-16). Measurement of mass average molecular weight, storage stability, and viscoelasticity of a coating film was carried out in the same manner as Example 1. The plastisol composition was prepared in the same manner as Example 1, and then evaluations were also made for chipping resistance strength and vibration damping property in the same manner as Example 1. The results are shown in Table 4.

[Table 2]

EP 3 144 328 B1

| | | Example 1 | | Example 2 | | Example 3 | | Example 4 | | Example 5 | | Example 6 | | Example 7 | |
|---|---|---|---|---|---|---|---|---|---|---|---|---|---|---|---|
| Acrylic polymer | | P-1 | | P-2 | | P-3 | | P-4 | | P-5 | | P-6 | | P-7 | |
| | | g | mol% | g | mol% | g | mol% | g | mol% | g | mol% | g | mol% | g | mol% |
| Acrylic monomer mixture (a) | MMA | 440.6 | 72.8 | 466.9 | 72.8 | 482.6 | 72.8 | 478.8 | 77.7 | 478.8 | 77.7 | 507.3 | 77.7 | 604.8 | 82.5 |
| | t-BMA | 208.4 | 24.3 | 220.9 | 24.3 | 6.0 | 24.3 | 169.9 | 19.4 | 169.9 | 19.4 | 180.0 | 19.4 | 151.5 | 14.6 |
| | 2-HEMA | 22.9 | 2.9 | 24.3 | 2.9 | 25.1 | 2.9 | 23.3 | 2.9 | 23.3 | 2.9 | 24.7 | 2.9 | 27.7 | 2.9 |
| Amount of n-OM added to (a) [g] | | 0 | | 0.76 | | 0.78 | | 0 | | 0 | | 0 | | 0 | |
| Amount of OTG added to (a) [g] | | 0 | | 0 | | 0 | | 0 | | 1.44 | | 1.52 | | 0 | |
| Acrylic monomer mixture (b) | MMA | 77.0 | 97.1 | 38.5 | 97.1 | 15.4 | 97.1 | 77.0 | 97.1 | 77.0 | 97.1 | 38.5 | 97.1 | 77.0 | 97.1 |
| | 2-HEMA | 3.0 | 2.9 | 1.5 | 2.9 | 0.6 | 2.9 | 3.0 | 2.9 | 3.0 | 2.9 | 1.5 | 2.9 | 3.0 | 2.9 |
| Amount of n-OM added to (b) [g] | | 0 | | 0.040 | | 0.016 | | 0 | | 0 | | 0 | | 0 | |
| Amount of OTG added to (b) [g] | | 0 | | 0 | | 0 | | 0 | | 0.16 | | 0.08 | | 0 | |
| Potassium persulfate [g] | | 0.4 | | 1.6 | | 1.6 | | 0.4 | | 1.6 | | 1.6 | | 0.4 | |
| Monomer mixture weight ratio (a/b) | | 89/11 | | 95/5 | | 98/2 | | 89/11 | | 89/11 | | 95/5 | | 91/9 | |
| Solubility parameter (SPA) | | 20.10 | | 20.10 | | 20.10 | | 20.19 | | 20.19 | | 20.19 | | 20.19 | |
| Solubility parameter (SPB) | | 20.53 | | 20.53 | | 20.53 | | 20.53 | | 20.53 | | 20.53 | | 20.53 | |
| Solubility parameter difference (SPB - SPA) | | 0.43 | | 0.43 | | 0.43 | | 0.34 | | 0.34 | | 0.34 | | 0.34 | |
| Glass transition temperature (TgA) | | 102.9 | | 102.9 | | 102.9 | | 102.7 | | 102.7 | | 102.7 | | 102.5 | |
| Mass average molecular weight (x10,000) | | 70 | | 12 | | 12 | | 70 | | 10 | | 10 | | 70 | |

(continued)

| | | Example 1 P-1 | Example 2 P-2 | Example 3 P-3 | Example 4 P-4 | Example 5 P-5 | Example 6 P-6 | Example 7 P-7 |
|---|---|---|---|---|---|---|---|---|
| Acrylic polymer | | g / mol% | g / mol% | g / mol% | g / mol% | g / mol% | g / mol% | g / mol% |
| Initial viscosity [Pa·s] | | 17 | 33 | 33 | 12 | 29 | 36 | 19 |
| Viscosity increase rate 40°C, 10 days [%] | | 8 | -36 | 32 | 13 | -48 | -52 | -31 |
| Chipping resistance strength [kg] | | 9 | 12 | 9 | 9 | 5 | 5 | 6 |
| Evaluation results | Loss coefficient -10°C | 0.1179 | 0.120 | 0.1161 | 0.0905 | 0.0863 | 0.0964 | 0.0976 |
| | 0°C | 0.1293 | 0.138 | 0.1287 | 0.0913 | 0.1040 | 0.1159 | 0.0617 |
| | 10°C | 0.1206 | 0.142 | 0.1251 | 0.0862 | 0.1259 | 0.1335 | 0.1149 |
| | 20°C | 0.1012 | 0.140 | 0.1135 | 0.0784 | 0.1269 | 0.1340 | 0.0958 |
| | 30°C | 0.0628 | 0.095 | 0.0707 | 00583 | 0.1267 | 0.1344 | 0.0860 |
| | 40°C | 0.0300 | 0.029 | 0.0300 | 0.0318 | 0.0934 | 0.1007 | 0.0672 |
| | 50°C | 0.0160 | 0.014 | 0.0139 | 0.0164 | 0.0329 | 0.0304 | 0.0364 |
| | 60°C | 0.0109 | 0.014 | 0.0094 | 0.0092 | 0.0146 | 0.0124 | 0.0188 |
| tanδ peak temperature of film | | 41 | 46 | 46 | 45 | 52 | 54 | 58 |
| tanδ peak value of film | | 0.83 | 0.91 | 1.02 | 0.87 | 0.90 | 1.04 | 0.94 |

[Table 3]

| | | | Example 8 | | Example 9 | | Example 10 | | Example 11 | | Comparative Example 1 | | Comparative Example 2 | |
|---|---|---|---|---|---|---|---|---|---|---|---|---|---|---|
| Acrylic polymer | | | P-8 | | P-9 | | P-10 | | P-11 | | P-12 | | P-13 | |
| | | | g | mol% | g | mol% | g | mol% | g | mol% | g | mol% | g | mol% |
| Acrylic monomer mixture (a) | | MMA | 652.8 | 87.4 | 388.2 | 72.8 | 307.7 | 68.0 | 307.7 | 68.0 | 274.9 | 55.0 | 280.7 | 55.8 |
| | | t-BMA | 102.9 | 9.7 | 183.6 | 24.3 | 6.0 | 29.1 | 187.2 | 29.1 | - | - | 265.6 | 37.2 |
| | | n-BMA | - | - | - | - | - | - | - | - | 319.1 | 45.0 | - | - |
| | | 2-HEMA | 28.3 | 2.9 | 20.2 | 2.9 | 17.1 | 2.9 | 17.1 | 2.9 | - | - | 45.8 | 7.0 |
| Amount of n-OM added to (a) [g] | | | 0 | | 0.64 | | 0 | | 0.56 | | 0 | | 0 | |
| Amount of OTG added to (a) [g] | | | 0 | | 0 | | 0 | | 0 | | 0 | | 0 | |
| Acrylic monomer mixture (b) | | MMA | 77.0 | 97.1 | 154.0 | 97.1 | 231.0 | 97.1 | 231.0 | 97.1 | 154.0 | 97.1 | 140.0 | 92.2 |
| | | 2-HEMA | 3.0 | 2.9 | 6.0 | 2.9 | 9.0 | 2.9 | 9.0 | 2.9 | 48.0 | 2.9 | - | - |
| | | n-BMA | - | - | - | - | - | - | - | - | - | - | 10.6 | 4.9 |
| | | AAEM | - | - | - | - | - | - | - | - | - | - | 9.4 | 2.9 |
| Amount of n-OM added to (b) [g] | | | 0 | | 0.16 | | 0 | | 0.24 | | 0 | | 0 | |
| Amount of OTG added to (b) [g] | | | 0 | | 0 | | 0 | | 0 | | 0 | | 0 | |
| Potassium persulfate [g] | | | 0.40 | | 1.60 | | 1.60 | | 1.60 | | 0.40 | | 0.40 | |
| Monomer mixture weight ratio (a/b) | | | 91/9 | | 79/21 | | 68/32 | | 68/32 | | 79/21 | | 79/21 | |
| Solubility parameter (SPA) | | | 20.36 | | 20.10 | | 20.02 | | 20.02 | | 19.87 | | 20.17 | |
| Solubility parameter (SPB) | | | 20.53 | | 20.53 | | 20.53 | | 20.53 | | 20.53 | | 20.35 | |
| Solubility parameter difference (SPB - SPA) | | | 0.17 | | 0.43 | | 0.51 | | 0.51 | | 0.66 | | 0.18 | |
| Glass transition temperature (TgA) | | | 102.3 | | 102.9 | | 103.0 | | 103.0 | | 54.0 | | 99.7 | |
| Mass average molecular weight (x10,000) | | | 70 | | 12 | | 30 | | 13 | | 70 | | 70 | |

(continued)

| | | | Example 8 | | Example 9 | | Example 10 | | Example 11 | | Comparative Example 1 | | Comparative Example 2 | |
|---|---|---|---|---|---|---|---|---|---|---|---|---|---|---|
| Acrylic polymer | | | P-8 | | P-9 | | P-10 | | P-11 | | P-12 | | P-13 | |
| | | | g | mol% | g | mol% | g | mol% | g | mol% | g | mol% | g | mol% |
| Evaluation results | Initial viscosity [Pa·s] | | 17 | | 32 | | 86 | | 63 | | 11 | | 10 | |
| | Viscosity increase rate 40°C, 10 days [%] | | -39 | | -65 | | -61 | | -68 | | gellation | | 450 | |
| | Chipping resistance strength [kg] | | 4 | | 9 | | 11 | | 9 | | 15 | | 15 | |
| | Loss coefficient | -10°C | 0.0656 | | 0.1031 | | 0.1160 | | 0.1105 | | 0.1166 | | 0.1017 | |
| | | 0°C | 0.0721 | | 0.1209 | | 0.1174 | | 0.1161 | | 0.0635 | | 0.1083 | |
| | | 10°C | 0.0753 | | 0.1220 | | 0.1045 | | 0.0987 | | 0.0323 | | 0.0964 | |
| | | 20°C | 0.0712 | | 0.1128 | | 0.0839 | | 0.0782 | | 0.0185 | | 0.0883 | |
| | | 30°C | 0.0695 | | 0.0766 | | 0.0539 | | 0.0491 | | 0.0137 | | 0.0660 | |
| | | 40°C | 0.0797 | | 0.0397 | | 0.0331 | | 0.0324 | | 0.0109 | | 0.0356 | |
| | | 50°C | 0.0429 | | 0.0236 | | 0.0235 | | 0.0242 | | 0.0095 | | 0.0188 | |
| | | 60°C | 0.0245 | | 0.0165 | | 0.0179 | | 0.0191 | | 0.0079 | | 0.0104 | |
| | tanδ peak temperature of film | | 70 | | 99 | | 98 | | 100 | | -17 | | 24 | |
| | tanδ peak value of film | | 1.17 | | 1.27 | | 1.28 | | 1.58 | | 0.57 | | 0.80 | |

EP 3 144 328 B1

22

[Table 4]

| | | | Comparative Example 3 | | Comparative Example 4 | | Comparative Example 5 | |
|---|---|---|---|---|---|---|---|---|
| Acrylic polymer | | | P-14 | | P-15 | | P-16 | |
| | | | g | mol% | g | mol% | g | mol% |
| Acrylic monomer mixture (a1) | | MMA | 276.0 | 60.1 | 485.5 | 92.8 | 272.0 | 60.0 |
| | | t-BMA | 260.0 | 39.9 | 50.5 | 7.2 | 257.6 | 40.0 |
| Amount of n-OM added to (a1) [g] | | | 0 | | 0 | | 0 | |
| Amount of OTG added to (a1) [g] | | | 0 | | 0 | | 0 | |
| Acrylic monomer mixture (a2) | | MMA | - | - | 108.1 | 74.7 | - | - |
| | | i-BMA | - | - | 51.9 | 25.3 | - | - |
| Amount of n-OM added to (a2) [g] | | | 0 | | 0 | | 0 | |
| Amount of OTG added to (a2) [g] | | | 0 | | 0 | | 0 | |
| Acrylic monomer mixture (b1) | | MMA | 80.0 | 100.0 | 80.0 | 100.0 | 102.4 | 74.9 |
| | | i-BMA | - | - | - | - | 48.8 | 25.1 |
| Amount of n-OM added to (b1) [g] | | | 0 | | 0 | | 0 | |
| Amount of OTG added to (b1) [g] | | | 0 | | 0 | | 0 | |
| Acrylic monomer mixture (b2) | | MMA | 13.5 | 63.5 | 13.5 | 63.5 | 76.0 | 100.0 |
| | | i-BMA | 8.4 | 27.3 | 8.4 | 27.3 | - | - |
| | | NVlmd | 1.8 | 9.2 | 1.8 | 9.2 | - | - |
| Amount of n-OM added to (b2) [g] | | | 0 | | 0 | | 0 | |
| Amount of OTG added to (b2) [g] | | | 0 | | 0 | | 0 | |
| Potassium persulfate [g] | | | 0.40 | | 0.40 | | 0.40 | |
| Monomer mixture weight ratio (a/b) | | | 87/13 | | 87/13 | | 70/30 | |
| Amount of t-BMA [mol%] in monomer mixture weight ratio (a) | | | 39.9 | | 5.7 | | 40.0 | |
| Solubility parameter (SPA) | | | 19.62 | | 20.14 | | 19.61 | |
| Solubility parameter (SPB) | | | 20.33 | | 20.33 | | 20.10 | |
| Solubility parameter difference (SPB - SPA) | | | 0.71 | | 0.19 | | 0.49 | |
| Glass transition temperature (TgA) | | | 106.0 | | 101.5 | | 106.0 | |
| Mass average molecular weight (x10,000) | | | 70 | | 70 | | 70 | |

(continued)

| | | | Comparative Example 3 | | Comparative Example 4 | | Comparative Example 5 | |
|---|---|---|---|---|---|---|---|---|
| Acrylic polymer | | | P-14 | | P-15 | | P-16 | |
| | | | g | mol% | g | mol% | g | mol% |
| Evaluation results | Initial viscosity [Pa·s] | | 18 | | 11 | | 16 | |
| | Viscosity increase rate 40°C, 10 days [%] | | 33 | | 157 | | 200 | |
| | Chipping resistance strength [kg] | | 21 | | 6 | | 21 | |
| | Loss coefficient | -10°C | 0.1607 | | 0.1282 | | 0.1587 | |
| | | 0°C | 0.1486 | | 0.1328 | | 0.1444 | |
| | | 10°C | 0.1146 | | 0.1325 | | 0.0941 | |
| | | 20°C | 0.0655 | | 0.0736 | | 0.0540 | |
| | | 30°C | 0.0377 | | 0.0736 | | 0.0279 | |
| | | 40°C | 0.0212 | | 0.0209 | | 0.0165 | |
| | | 50°C | 0.0122 | | 0.0137 | | 0.0115 | |
| | | 60°C | 0.0089 | | 0.0104 | | 0.0089 | |
| | $\tan\delta$ peak temperature of film | | 1 | | 76 | | 1 | |
| | $\tan\delta$ peak value of film | | 0.53 | | 0.63 | | 0.53 | |

Abbreviations in the table indicate the following chemical compounds.

- "MMA": methyl methacrylate (manufactured by Mitsubishi Rayon Co., Ltd.)
- "t-BMA": t-butyl methacrylate (manufactured by Mitsubishi Rayon Co., Ltd.)
- "n-BMA": n-butyl mathacrylate (manufactured by Mitsubishi Rayon Co., Ltd.)
- "2-HEMA": 2-hydroxyethyl methacrylate (manufactured by Mitsubishi Rayon Co., Ltd.)
- "i-BMA": i-butyl methacrylate (manufactured by Mitsubishi Rayon Co., Ltd.)
- "NVImd": N-vinyl imidazole (manufactured by BASF)
- "AAEM": 2-(acetoacetyloxy)ethyl methacrylate (manufactured by Eastman Chemical Company)
- "n-OM": 1-octane thiol (manufactured by Wako Pure Chemical Industries, Ltd.)
- "OTG": 2-ethylhexyl thioglycolic acid (manufactured by YODO KAGAKU CO., LTD.)

As shown in Tables 2 and 3, the plastisol compositions of Examples 1 to 11 have excellent storage stability, and a coating film formed of those plastisol compositions has an excellent vibration damping property and excellent chipping resistance.

The acrylic polymer (P-12) used for the plastisol compositions of Comparative Example 1 has low values of solubility parameter (SPA) and Tg (TgA) of the polymer (A), i.e., 19.87 and 54.0°C, respectively, and the difference in solubility parameter between the polymer (A) and the polymer (B) (i.e., (SPB) - (SPA)) was as high as 0.66. Thus, excessive plasticization is caused by a plasticizer, and thus the coating film to be obtained has high chipping resistance but the storage stability was poor. Furthermore, the $\tan\delta$ peak temperature of coating film was -17°C, which is significantly lower than the room temperature. For such reasons, the vibration damping property in a room temperature region like 10°C or higher, in particular, in a high temperature region like 30°C or higher, was poor.

The acrylic polymer (P-13) used for the plastisol composition of Comparative Example 2 has high values of solubility parameter (SPA) and Tg (TgA) of the polymer (A), i.e., 20.17 and 99.7°C, respectively, and the difference in solubility parameter between the polymer (A) and the polymer (B) (i.e., (SPB) - (SPA)) was as low as 0.18. However, as t-butyl methacrylate in the monomer mixture (a) was as high as 37.2% by mol, excessive plasticization is caused by a plasticizer, and thus the coating film to be obtained has high chipping resistance but the storage stability was poor.

The acrylic polymer (P-14) used for the plastisol composition of Comparative Example 3 has high TgA of the polymer (A), i.e., 100.6°C. However, as the SPA value was as low as 19.62, excessive plasticization is caused by a plasticizer, and thus the coating film to be obtained has high chinning resistance but the $\tan\delta$ peak temperature of coating film was as low as 1°C. For such reasons, the vibration damping property in a high temperature region like 30°C or higher was poor.

The acrylic polymer (P-15) used for the plastisol composition of Comparative Example 4 has high values of solubility parameter (SPA) and Tg (TgA) of the polymer (A), i.e., 20.14 and 101.5°C, respectively, and the difference in solubility parameter between the polymer (A) and the polymer (B) (i.e., (SPB) - (SPA)) was as low as 0.19. However, t-butyl methacrylate in the monomer mixture (a) was as low as 5.7% by mol. However, as there is a layer (a2) having low Tg, excessive plasticization is caused, and thus the storage stability was insufficient.

The acrylic polymer (P-16) used for the plastisol composition of Comparative Example 5 has high Tg (TgA) of the polymer (A), i.e., 106°C, and the difference in solubility parameter between the polymer (A) and the polymer (B) (i.e., (SPB) - (SPA)) was as low as 0.49. However, the solubility parameter (SPA) value was as low as 19.61. Thus, excessive plasticization is caused by a plasticizer, and thus the coating film to be obtained has high chipping resistance but the tanδ peak temperature of coating film was as low as 1°C. For such reasons, the vibration damping property in a high temperature region like 30°C or higher was poor in particular. Furthermore, the storage stability was insufficient.

<Example 12>

Determination of physical properties was carried out for a case in which P-4 is used as an acrylic polymer and gold mica W-40H is additionally blended as a filler.

[Preparation of plastisol blended with gold mica]

100 Parts of calcium carbonate (trade name: Whiton P-70, manufactured by SHIRAISHI CALCIUM KAISHA, LTD.) as a filler, 80 parts of diisononyl phthalate (manufactured by J-PLUS Co., Ltd.) and 20 parts of Santicizer 278 (trade name, manufactured by Ferro Japan, phthalic acid texanol benzyl) as a plasticizer, 20 parts of a block urethane resin (trade name: ADEKA resin QR-9401, manufactured by ADEKA CORPORATION) as an adhesive, 1.68 parts of adipic acid dihydrazide (trade name: Adipic Dihydrazide, manufactured by Otsuka Chemical Co., Ltd.) as a curing agent, 20 parts of ISOPAR H (trade name, manufactured by Exxon Mobil) as a solvent, 3 parts of calcium oxide as a hygroscopic agent, and 25 parts of gold mica W-40H (trade name, manufactured by Repco Inc.) as a filler were mixed under atmospheric pressure (0.1 MPa) for 10 seconds by a vacuum mixer ARV-200 (manufactured by THINKY Corporation). Then, the pressure was reduced to 2.7 kPa, and the mixture was mixed for 170 seconds to obtain a kneaded product composed of calcium carbonate and plasticizer. Subsequently, 100 parts of the polymer (P-4) was added thereto and mixed under atmospheric pressure (0.1 MPa) for 10 seconds by a vacuum mixer, then, the pressure was reduced to 2.7 kPa and the mixture was mixed for 110 seconds to obtain a plastisol composition. The resultant plastisol composition was evaluated for chipping resistance strength and vibration damping property, and the evaluations results are shwn in Table 5.

[Table 5]

| | | | Example 12 | Example 13 | Example 14 | Example 15 | Example 16 |
|---|---|---|---|---|---|---|---|
| Acrylic polymer | | | P-4 | P-4 | P-4 | P-4 | P-6 |
| Filler | | | W-40 H | M-200 | K-330 | W-40H | W-40H |
| Foaming agent | | | - | - | - | ST#44 | FN-78D |
| Evaluation results | Chipping resistance strength [kg] | | 9 | 12 | 9 | 9 | 5 |
| | Loss coefficient | -10°C | 0.1071 | 0.1152 | 0.0916 | 0.1133 | 0.0777 |
| | | 0°C | 0.1346 | 0.1236 | 0.0995 | 0.1322 | 0.1062 |
| | | 10°C | 0.1348 | 0.1199 | 0.1108 | 0.1517 | 0.1345 |
| | | 20°C | 0.1115 | 0.0994 | 0.0930 | 0.1298 | 0.1448 |
| | | 30°C | 0.0913 | 0.0715 | 0.0706 | 0.1076 | 0.1679 |
| | | 40°C | 0.0454 | 0.0347 | 0.0322 | 0.0563 | 0.1590 |
| | | 50°C | 0.0181 | 0.0162 | 0.0143 | 0.0228 | 0.0940 |
| | | 60°C | 0.0095 | 0.0102 | 0.0089 | 0.0115 | 0.0334 |

Abbreviations in the table indicate the following chemical compounds.

- "W-40H": gold mica (wet-pulverized product), average particle diameter: 33 $\mu$m, aspect ratio: 55 (manufactured by Repco Inc.)
- "M-200": gold mica (wet-pulverized product), average particle diameter: 55 $\mu$m, aspect ratio: 33 (manufactured by Repco Inc.)
- "K-330": wollastonite, average particle diameter: 20 $\mu$m, aspect ratio: 3 to 30 (manufactured by Keiwa Rozai Co., Ltd.)
- "ST#44": composite foaming agent of azodicarbonamide and 4,4'-oxybis(benzenesulfonylhydrazide), trade name: SPANGCELL ST#44 (manufactured by EIWA CHEMICAL IND.CO.,LTD.)
- "FN-78D": micro balloon containing hydrogen carbide (acrylonitrile-based copolymer shell type), product name: Matsumoto Microsphere FN-78D (manufactured by Matsumoto Yushi-Seivaku Co., Ltd.), average particle diameter: 35 to 50 $\mu$m, expansion start temperature: 100 to 115°C, maximum expansion temperature: 150 to 165°C

<Example 13>

Determination of physical properties was carried out for a case in which P-4 is used as an acrylic polymer and white mica M-200 is additionally blended as a filler.

The procedures were all carried out in the same manner as Example 12 except that M-200 is used instead of W-40H. The resultant plastisol composition was evaluated for chipping resistance strength and vibration damping property, and the evaluations results are shown in Table 5.

<Example 14>

Determination of physical properties was carried out for a case in which P-4 is used as an acrylic polymer and wollastonite K-330 is additionally blended as a filler.

The procedures were all carried out in the same manner as Example 12 except that K-300 is used instead of W-40H. The resultant plastisol composition was evaluated for chipping resistance strength and vibration damping property, and the evaluations results are shown in Table 5.

<Example 15>

Determination of physical properties was carried out for a case in which P-4 is used as an acrylic polymer and SPANGCELL ST#44 is blended as a foaming agent.

[Preparation of plastisol blended with ST#44]

100 Parts of calcium carbonate (trade name: Whiton P-70, manufactured by SHIRAISHI CALCIUM KAISHA, LTD.) as a filler, 80 parts of diisononyl phthalate (manufactured by J-PLUS Co., Ltd.) and 20 parts of Santicizer 278 (trade name, manufactured by Ferro Japan, phthalic acid texanol benzyl) as a plasticizer, 20 parts of a block urethane resin (trade name: ADEKA resin QR-9401, manufactured by ADEKA CORPORATION) as an adhesive, 1.68 parts of adipic acid dihydrazide (trade name: Adipic Dihydrazide, manufactured by Otsuka Chemical Co., Ltd.) as a curing agent, 20 parts of ISOPAR H (trade name, manufactured by Exxon Mobil) as a solvent, 3 parts of calcium oxide as a hygroscopic agent, 25 parts of gold mica W-40H (trade name, manufactured by Repco Inc.) as a filler, and 2 parts of SPANGCELL ST#44 as a foaming agent were mixed under atmospheric pressure (0.1 MPa) for 10 seconds by a vacuum mixer ARV-200 (manufactured by THINKY Corporation). Then, the pressure was reduced to 2.7 kPa, and the mixture was mixed for 170 seconds to obtain a kneaded product composed of calcium carbonate and plasticizer. Subsequently, 100 parts of the polymer (P-4) was added thereto and mixed under atmospheric pressure (0.1 MPa) for 10 seconds by a vacuum mixer, then, the pressure was reduced to 2.7 kPa and the mixture was mixed for 110 seconds to obtain a plastisol composition. The resultant plastisol composition was evaluated for chipping resistance strength and vibration damping property, and the evaluations results are shown in Table 5.

<Example 16>

Determination of physical properties was carried out for a case in which P-6 is used as an acrylic polymer and Matsumoto Microsphere FN-78D is blended as a foaming agent.

The procedures were all carried out in the same manner as Example 15 except that FN-78D is used instead of ST#44. The resultant plastisol composition was evaluated for chipping resistance strength and vibration damping property, and the evaluations results are shown in Table 5.

By using gold mica as a filler in the plastisol composition, Example 12 exhibited a higher numerical value of the loss coefficient η than Example 4 in which the same acrylic polymer P-4 is used. When a filler with high aspect ratio is used as a filler, the vibration damping property of a coating film to be obtained was further improved.

By using white mica as a filler in the plastisol composition, Example 13 exhibited a higher numerical value of the loss coefficient η than Example 4 in which the same acrylic polymer P-4 is used.

By using wollastonite as a filler in the plastisol composition, Example 14 exhibited a higher numerical value of the loss coefficient η than Example 4 in which the same acrylic polymer P-4 is used.

By using SPANGCELL ST#44 as a foaming agent in the plastisol composition, Example 15 exhibited a higher numerical value of the loss coefficient η than Example 12 in which the same acrylic polymer P-4 is used and gold mica is used as a filler.

By using Matsumoto Microsphere FN-78D as a foaming agent in the plastisol composition, Example 16 exhibited a higher numerical value of the loss coefficient η than Example 6 in which the same acrylic polymer P-6 is used.

INDUSTRIAL APPLICABILITY

The plastisol composition using the acrylic polymer (P) of the invention has excellent storage stability, and a coating film obtained from the plastisol composition has an effect of having excellent chipping resistance and excellent vibration damping property.

**Claims**

1. A method for producing an acrylic polymer (P) comprising:

    a step (1) of obtaining a polymer (A) by polymerizing an acrylic monomer mixture (a); and
    a step (2) of polymerizing an acrylic monomer mixture (b) in a dispersion liquid including the polymer (A) to form a polymer (B), and obtaining an acrylic polymer (P) including the polymer (A) and the polymer (B),
    wherein the content ratio of t-butyl methacrylate is 8 to 32% by mol within 100% by mol of the total of the monomers included in the acrylic monomer mixture (a),
    the solubility parameter (SPA) of the polymer (A), as determined according to the description, is 19.90 $(J/cm^3)^{1/2}$ or more and the glass transition temperature of the polymer (A) is 90°C or higher, and
    the relationship between the solubility parameter (SPB) of the polymer (B), as determined according to the description, and the solubility parameter (SPA) satisfies the following formula (1)

$$0.05 \leq (SPB) - (SPA) \leq 0.55 \cdots (1).$$

2. The method for producing the acrylic polymer (P) according to claim 1, wherein mass ratio between the acrylic monomer mixture (a) and the acrylic monomer mixture (b) is, when expressed in terms of [mass of the acrylic monomer mixture (a)]/[mass of the acrylic monomer mixture (b)], 98/2 to 65/35.

3. The method for producing the acrylic polymer (P) according to claim 1, wherein mass average molecular weight of the acrylic polymer (P) is 50,000 to 1,000,000.

4. An acrylic polymer (P) obtained by the production method according to any one of claims 1 to 3.

5. An acrylic polymer (P) according to claim 4 having at least one tanδ peak of 0.7 or more in a range of 30 to 105°C in a temperature-dependent chart of dynamic viscoelasticity, in which the dynamic viscoelasticity is measured by preparing a sheet-like test piece according to the following measurement method:
    [Measurement method]
    To 100 parts by mass of the acrylic polymer (P), 100 parts by mass of diisononyl phthalate and 2.5 parts by mass of calcium oxide are added, mixed and dispersed homogeneously, and after performing casting to thickness of 1 mm, a sheet-like test piece is prepared by heating at 130°C for 30 minutes, and dynamic viscoelasticity of the test piece is measured in a range of -50 to 150°C at frequency of 1 Hz.

6. An acrylic polymer (P) according to claim 4 having a multilayer structure which includes a polymer (A) and a polymer (B) for coating the polymer (A), in which the acrylic polymer (P) includes, when the total of the monomer units constituting the polymer (A) is 100% by mol, 68 to 92% by mol of methyl methacrylate unit, 8 to 32% by mol of t-butyl methacrylate unit, and 30% by mol or less of other monomer units and, when the total of the monomer units constituting the polymer (B) is 100% by mol, 80% by mol or more of methyl methacrylate unit and 20% by mol or less of other monomer units, and mass ratio between the polymer (A) and the polymer (B) is, when expressed in terms of [mass of the polymer (A)]/[mass of the polymer (B)], 98/2 to 65/35.

7. A plastisol composition comprising the acrylic polymer (P) according to any one of claims 4 to 6.

8. A plastisol composition comprising the acrylic polymer (P) according to any one of claims 4 to 6 and a plasticizer.

9. The plastisol composition according to claim 8, wherein phthalic acid dialkyl ester is contained as the plasticizer.

10. The plastisol composition according to claim 9, wherein phthalic acid alkyl benzyl ester is further contained as the plasticizer.

11. A plastisol composition comprising the acrylic polymer (P) according to any one of claims 4 to 6, a plasticizer, and a filler.

12. The plastisol composition according to claim 11, wherein at least one selected from gold mica, white mica, and wollastonite is contained as the filler.

13. A plastisol composition comprising the acrylic polymer (P) according to any one of claims 4 to 6, a plasticizer, a filler, and an adhesive.

14. A plastisol composition comprising the acrylic polymer (P) according to any one of claims 4 to 6, a plasticizer, a filler, an adhesive, and a foaming agent.

15. The plastisol composition according to any one of claims 8 to 14, wherein the plastisol composition is used for undercoating.


**Patentansprüche**

1. Verfahren zur Herstellung eines Acrylpolymers (P), das umfasst:

   einen Schritt (1) des Erhaltens eines Polymers (A) durch Polymerisieren einer Acrylmonomermischung (a); und einen Schritt (2) des Polymerisierens einer Acrylmonomermischung (b) in einer Dispersionsflüssigkeit, die das Polymer (A) beinhaltet, um ein Polymer (B) zu bilden, und des Erhaltens eines Acrylpolymers (P), das das Polymer (A) und das Polymer (B) beinhaltet,
   wobei das Gehaltsverhältnis von t-Butylmethacrylat 8 bis 32 Mol-% innerhalb von 100 Mol-% von der Summe der in der Acrylmonomermischung (a) enthaltenen Monomere beträgt,
   der Löslichkeitsparameter (SPA) des Polymers (A), wie gemäß der Beschreibung bestimmt, 19,90 $(J/cm^3)^{1/2}$ oder mehr beträgt und die Glasübergangstemperatur des Polymers (A) 90°C oder höher ist, und
   die Beziehung zwischen dem Löslichkeitsparameter (SPB) des Polymers (B), wie gemäß der Beschreibung bestimmt, und dem Löslichkeitsparameter (SPA) die folgende Formel (1) erfüllt

$$0,05 \leq (SPB) - (SPA) \leq 0,55 \cdots (1).$$

2. Verfahren zur Herstellung des Acrylpolymers (P) nach Anspruch 1, wobei das Massenverhältnis zwischen der Acrylmonomermischung (a) und der Acrylmonomermischung (b), ausgedrückt als [Masse der Acrylmonomermischung (a)]/[Masse der Acrylmonomermischung (b)], 98/2 bis 65/35 beträgt.

3. Verfahren zur Herstellung des Acrylpolymers (P) nach Anspruch 1, wobei das massengemittelte Molekulargewicht des Acrylpolymers (P) 50.000 bis 1.000.000 beträgt.

4. Acrylpolymer (P), erhalten durch das Herstellungsverfahren nach einem der Ansprüche 1 bis 3.

**5.** Acrylpolymer (P) nach Anspruch 4 mit mindestens einem tanδ-Peak von 0,7 oder mehr in einem Bereich von 30 bis 105°C in einem temperaturabhängigen Diagramm der dynamischen Viskoelastizität, wobei die dynamische Viskoelastizität durch Anfertigen eines plattenförmigen Prüfkörpers nach dem folgenden Messverfahren gemessen wird: [Messmethode]

Zu 100 Massenteilen des Acrylpolymers (P) werden 100 Massenteile Diisononylphthalat und 2,5 Massenteile Calciumoxid homogen zugegeben, gemischt und dispergiert, und nach dem Gießen zu einer Dicke von 1 mm wird durch Erwärmen auf 130°C für 30 Minuten ein plattenförmiger Prüfkörper hergestellt, und die dynamische Viskoelastizität des Prüfkörpers wird in einem Bereich von -50 bis 150°C bei einer Frequenz von 1 Hz gemessen.

**6.** Acrylpolymer (P) nach Anspruch 4 mit einer Mehrschichtstruktur, die ein Polymer (A) und ein Polymer (B) zum Beschichten des Polymers (A) beinhaltet, wobei das Acrylpolymer (P), wenn die Summe der das Polymer (A) konstituierenden Monomereinheiten 100 Mol-% beträgt, 68 bis 92 Mol-% Methylmethacrylateinheit, 8 bis 32 Mol-% t-Butylmethacrylateinheit, und 30 Mol-% oder weniger anderer Monomereinheiten, und, wenn die Summe der das Polymer (B) konstituierenden Monomereinheiten 100 Mol-% beträgt, 80 Mol-% oder mehr Methylmethacrylateinheit und 20 Mol-% oder weniger anderer Monomereinheiten beinhaltet, und das Massenverhältnis zwischen dem Polymer (A) und dem Polymer (B), ausgedrückt als [Masse des Polymers (A)]/[Masse des Polymers (B)], 98/2 bis 65/35 beträgt.

**7.** Plastisolzusammensetzung, die das Acrylpolymer (P) nach einem der Ansprüche 4 bis 6 umfasst.

**8.** Plastisolzusammensetzung, die das Acrylpolymer (P) nach einem der Ansprüche 4 bis 6 und einen Weichmacher umfasst.

**9.** Plastisolzusammensetzung nach Anspruch 8, wobei Phthalsäuredialkylester als Weichmacher enthalten ist.

**10.** Plastisolzusammensetzung nach Anspruch 9, wobei weiterhin Phthalsäurealkylbenzylester als Weichmacher enthalten ist.

**11.** Plastisolzusammensetzung, die das Acrylpolymer (P) nach einem der Ansprüche 4 bis 6, einen Weichmacher und einen Füllstoff umfasst.

**12.** Plastisolzusammensetzung nach Anspruch 11, wobei mindestens eines ausgewählt aus Goldglimmer, Weißglimmer und Wollastonit als der Füllstoff enthalten ist.

**13.** Plastisolzusammensetzung, die das Acrylpolymer (P) nach einem der Ansprüche 4 bis 6, einen Weichmacher, einen Füllstoff und einen Klebstoff umfasst.

**14.** Plastisolzusammensetzung, die das Acrylpolymer (P) nach einem der Ansprüche 4 bis 6, einen Weichmacher, einen Füllstoff, einen Klebstoff und ein Schaummittel umfasst.

**15.** Plastisolzusammensetzung nach einem der Ansprüche 8 bis 14, wobei die Plastisolzusammensetzung zum Grundieren verwendet wird.

## Revendications

**1.** Procédé pour produire un polymère acrylique (P), comprenant :

une étape (1) d'obtention d'un polymère (A) par polymérisation d'un mélange de monomères acryliques (a) ; et une étape (2) de polymérisation d'un mélange de monomères acryliques (b) dans un liquide de dispersion contenant le polymère (A) pour former un polymère (B), et d'obtention d'un polymère acrylique (P) contenant le polymère (A) et le polymère (B),
dans lequel la proportion de la teneur en méthacrylate de t-butyle est de 8 à 32 % en moles pour 100 % en moles du total des monomères contenus dans le mélange de monomères acryliques (a),
le paramètre de solubilité (SPA) du polymère (A), tel que déterminé conformément à la description, est de 19,90 $(J/cm^3)^{1/2}$ ou plus et la température de transition vitreuse du polymère (A) est de 90 °C ou plus, et la relation entre le paramètre de solubilité (SPB) du polymère (B), tel que déterminé conformément à la description, et le paramètre de solubilité (SPA), satisfait à la formule (1) suivante

$$0,05 \leq (SPB) - (SPA) \leq 0,55 \ldots (1).$$

2. Procédé pour produire un polymère acrylique (P) selon la revendication 1, dans lequel le rapport en masse entre le mélange de monomères acryliques (a) et le mélange de monomères acryliques (b), lorsqu'il est exprimé en termes de [masse du mélange de monomères acryliques (a)] / [masse du mélange de monomères acryliques (b)], est de 98/2 à 65/35.

3. Procédé pour produire un polymère acrylique (P) selon la revendication 1, dans lequel la masse moléculaire moyenne en masse du polymère acrylique (P) est de 50 000 à 1 000 000.

4. Polymère acrylique (P) obtenu par le procédé de production selon l'une quelconque des revendications 1 à 3.

5. Polymère acrylique (P) selon la revendication 4, ayant au moins un pic de tan$\delta$ de 0,7 ou plus dans la plage allant de 30 à 105 °C dans un graphique de la viscoélasticité dynamique en fonction de la température, dans lequel la viscoélasticité dynamique est mesurée par préparation d'une éprouvette en forme de feuille conformément au procédé de mesure suivant :
[Procédé de mesure]
A 100 parties en masse du polymère acrylique (P), 100 parties en masse de phtalate de diisononyle et 2,5 parties en masse d'oxyde de calcium sont ajoutées, mélangées et dispersées de façon homogène, et après mise en oeuvre d'une coulée à une épaisseur de 1 mm, une éprouvette en forme de feuille est préparée par chauffage à 130 °C pendant 30 minutes, et la viscoélasticité dynamique de l'éprouvette est mesurée dans la plage allant de -50 à 150 °C et à une fréquence de 1 Hz.

6. Polymère acrylique (P) selon la revendication 4, ayant une structure multicouche qui contient un polymère (A) et un polymère (B) pour revêtir le polymère (A), dans lequel le polymère acrylique (P) contient, quand le total des motifs monomères constituant le polymère (A) est de 100 % en moles, 68 à 92 % en moles de motifs méthacrylate de méthyle, 8 à 32 % en moles de motifs méthacrylate de t-butyle, et 30 % en moles ou moins d'autres motifs monomères et, quand le total des motifs monomères constituant le polymère (B) est de 100 % en moles, 80 % en moles ou plus de motifs méthacrylate de méthyle et 20 % en moles ou moins d'autres motifs monomères, et le rapport en masse entre le polymère (A) et le polymère (B), quand il est exprimé en termes de [masse du polymère (A)] / [masse du polymère (B)], est de 98/2 à 65/35.

7. Composition de plastisol comprenant le polymère acrylique (P) selon l'une quelconque des revendications 4 à 6.

8. Composition de plastisol comprenant le polymère acrylique (P) selon l'une quelconque des revendications 4 à 6 et un plastifiant.

9. Composition de plastisol selon la revendication 8, dans laquelle un ester dialkylique d'acide phtalique est contenu en tant que plastifiant.

10. Composition de plastisol selon la revendication 9, dans lequel un ester alkylbenzylique d'acide phtalique est en outre contenu en tant que plastifiant.

11. Composition de plastisol comprenant le polymère acrylique (P) selon l'une quelconque des revendications 4 à 6, un plastifiant, et une charge.

12. Composition de plastisol selon la revendication 11, dans laquelle au moins l'un choisi parmi le mica doré, le mica blanc et la wollastonite est contenu en tant que charge.

13. Composition de plastisol comprenant le polymère acrylique (P) selon l'une quelconque des revendications 4 à 6, un plastifiant, une charge, et un adhésif.

14. Composition de plastisol comprenant le polymère acrylique (P) selon l'une quelconque des revendications 4 à 6, un plastifiant, une charge, un adhésif, et un agent moussant.

15. Composition de plastisol selon l'une quelconque des revendications 8 à 14, dans laquelle la composition de plastisol est utilisée pour réaliser une sous-couche.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008090906 A
- JP 2008231377 A
- WO 2012077293 A
- WO 2011155566 A

### Non-patent literature cited in the description

- *Polymer Engineering and Science,* 1974, vol. 14, 147
- Polymer Data Handbook
- **H. OBERST.** U'ber die Dampfung der Biegeschwingungen dunner Blesche durch festhafitende Belage. *ACUSTICA,* 1952, vol. 2, 181-194